# EUROPÄISCHE PATENTSCHRIFT

(11) **EP 0 925 700 B1**
(45) Veröffentlichungstag und Bekanntmachung des Hinweises auf die Patenterteilung: **26.03.2003**
(21) Anmeldenummer: 97939110.9
(22) Anmeldetag: 15.09.1997
(51) Int. Cl.: H04Q 7/32

(54) **GROSSRAUMREISEFAHRZEUG MIT EINER NACHRICHTENTECHNISCHEN VERBINDUNGSEINRICHTUNG SOWIE VERBINDUNGSEINRICHTUNG UND TEILNEHMERSTATION**
HIGH CAPACITY PASSENGER VEHICLE PROVIDED WITH TELECOMMUNICATION EQUIPMENT, THE EQUIPMENT, AND SUBSCRIBER STATION
VEHICULE TOURISME GRANDE CAPACITE DOTE D'UN EQUIPEMENT TECHNIQUE DE TELECOMMUNICATION, EQUIPEMENT ET STATION D'ABONNE

(30) Priorität: 13.09.1996 CH 225196; 19.09.1996 CH 229796; 08.11.1996 CH 276496; 19.12.1996 CH 312096; 30.12.1996 WO PCT/IB96/01476; 12.03.1997 DE 29705230 U; 13.03.1997 CH 61297
(43) Veröffentlichungstag der Anmeldung: 30.06.1999
(73) Patentinhaber: Peiker, Andreas, 61381 Friedrichsdorf/Ts (DE)
(72) Erfinder: Peiker, Andreas, 61381 Friedrichsdorf/Ts (DE)
(74) Vertreter: Roshardt, Werner Alfred, Dipl.-Phys.
(86) Internationale Anmeldenummer: IB9701108
(87) Internationale Veröffentlichungsnummer: WO98011747

(56) Entgegenhaltungen:
- WO-A-94/28684
- DE-A- 3 621 990

## Beschreibung

Die Erfindung betrifft eine nachrichtentechnische Teilnehmerstation, eine Verbindungsanordnung mit dieser Teilnehmerstation sowie ein Fahrzeug mit dieser Verbindungsanordnung, wobei das Fahrzeug bevorzugt ein Großraumreisefahrzeug ist. Wie unten ausgeführt wird, ist ein Einsatz der Verbindungsanordnung im Großraumfahrzeug nicht zwingend; andere mobile und auch nicht mobile Einsatzorte sind aufgeführt. Auch muß die hier beschriebene Teilnehmerstation nicht zwingend mit der Verbindungsanordnung zusammen verwendet werden.

### Stand der Technik

In der DE-A 36 21 990 ist ein Großraumfahrzeug mit einer nachrichtentechnischen Verbindungsanordnung beschrieben, bei der mehrere Teilnehmerstationen miteinander Nachrichten über eine Sende/Empfangsanlage miteinander austauschen konnten.

Aus der GB-A 2 270 405 ist femer ein Fahrzeug mit einer nachrichtentechnischen Teilnehmerstation bekannt, bei dem über ein sog. "Global Position System "der jeweilige Standort des Fahrzeug ermittel und übermittelbar ist.

### Aufgabe der Erfindung

Aufgabe der Erfindung ist es eine Teilnehmerstation sowie eine Verbindungsanordnung zu schaffen, bei der eine Telefoniereinrichtung nicht nur nachrichtentechnischen Zwecken dient, sondern mit peripheren Einrichtungen kommunizieren kann. Unter Nachrichtentechnik werden insbesondere Gesprächs- und Faximileübermittlungen verstanden. Ferner ist es Aufgabe der Erfindung, ein System zu schaffen, welches dem Reisenden u.a. eine einwandfreie, Komfortable und vielseitige Kommunikation nach außen sowie mit Mitreisenden während der Fahrt ermöglicht, wobei unter Kommunikation hier nicht nur Sprechverkehr verstanden wird.

Benutzereigene Handfunktelefone waren bisher in Großraumreisefahrzeugen, wie Eisenbahnwaggons, Fähren, Langstreckenbussen, ... nur bedingt verwendbar. Die nachrichtentechnische Daten- und Gesprächsübermittlung ließ in der Regel zu wünschen übrig.

Die Erfindung geht hier neue Wege, indem jedem Reisenden bevorzugt in unmittelbarer Nähe seines Sitzplatzes, d.h. in Griffnähe eine Teilnehmerstation zur Verfügung gestellt wird, welche mittels fahrzeugeigenen Nachrichtensende- und Empfangseinheiten eine Übermittlung hoher Qualität erlaubt.

In einer bevorzugten Ausführungsvariante werden die Basisstationen an den Sitzplätzen mit einer Stromversorgung versehen, welche zum Aufladen eines Energiespeichers bei einer tragbaren, vom Sitzplatz entfernbaren Telefoniereinheit der Teilnehmerstation dient Auch kann diese Stromzuführung mit einer entsprechenden Entkopplungseinrichtung zwischen Energieversorgung und Nachrichtensignal versehen werden. Das Stromkabel dient dann gleichzeitig als Signalleitung zu einer Dienstleistungsvermittlungseinrichtung einer zentralen Kommunikationseinrichtung. Diese Dienstleistungsvermittlungseinrichtung ist dann mit einer nach außen wirkenden Nachrichtensende- und Empfangseinheit verbunden. Diese Einheit wirkt als Repeater zu einem terrestrischen oder einem Satelliten-Sende-Empfänger. Werden die Teilnehmerstationen in Eisenbahnwaggons angeordnet, so wird jeder Waggon mit einer entsprechenden Nachrichtensende- und Empfangseinheit ausgerüstet.

Die Entkopplungseinrichtung in der Teilnehmerstation kann entfallen, wenn Handfunktelefone verwendet werden, welche mit einer zentralen Innenantenne kommunizieren können.

Da die Teilnehmerstationen dem öffentlichen, allgemeinen Publikumsverkehr dienen sollen, sind Vorkehrungen zu treffen, welche einem Diebstahl sowie Vandalismus vorbeugen. Maßnahmen hierzu sind unten ausgeführt. Auch werden gemäß untenstehenden Erläuterungen Vorkehrungen getroffen, welche eine unberechtigte Benutzung verhindern.

In vorteilhafter Weise können nun diese Teilnehmerstationen nicht nur nachrichtentechnisch genutzt werden, sondern auch für Informationen an den Reisenden und zu dessen Unterhaltung.

Erfindungsgemäß ist die eine Teilnehmerwahleinrichtung, eine Sprech- und Hörkapsel aufweisende Telefoniereinrichtung nicht direkt über ein nachrichtentechnisches Netz (Übertragungsleitung oder Funk) mit anderen potentiellen Gesprächspartnern verbunden; es ist eine Steuereinrichtung zwischengeschaltet. Mit dieser Steuereinrichtung wirken nun periphere Einheiten zusammen, um bevorzugt aufgrund der Geberdaten vorgegebene Verbindungswege mit der Telefoniereinrichtung anzuwählen sowie zu diesen und auch von diesen Daten zu übermitteln. Mit der Teilnehmerwahleinrichtung können nun wie bei einem "landläufigen" Telefon üblich, Teilnehmer direkt angewählt werden. Handelt es sich jedoch um Teilnehmer, von denen geheimzuhaltende Daten abrufbar sind, so kann die Verbindung erst hergestellt werden, wenn mittels einer Authentisierungeinheit die Berechtigung des Anrufers ermittelt ist.

In einer bevorzugten Ausführungsvariante sind diese Authentisierungsdaten derart in der Authentisierungseinheit abgelegt, daß einmal abgelegte Daten ohne mechanische Zerstörung der Einheit nicht mehr entfern- und auch nicht mehr änderbar sind. Die Authentisierungsdaten werden bevorzugt bei der Herstellung der Authentisierungseinheit in diese eingebracht. Gleichzeitig wird ein zur Authentisierungseinheit gehörendes Authentisierungsmittel mit den Authentisierungsdaten versehen. Diese hohe Authentisierungssicherheit wird man beim Übertragen eines Geldbetrags auf eine Kreditkarte (pay-card) wählen, deren übertragener Geldbetrag dann an einer Zahlstelle [P.O.S. (point of sales)] abrufbar ist. Diese Kreditkarte trägt dann ebenfalls ein Authorisierungsmittel, welches mit demjenigen der Authorisierungseinheit der Telefoniereinrichtung kommuniziert. Erst nach einer Authentisierung erfolgt die Verbindungsaufnahme mit dem über die Teilnehmerwahleinrichtung angewählten Bankinstitut. Die Anwahl kann jedoch auch selbsttätig über eine entsprechende, in der Steuereinrichtung abgelegte Nummer erfolgen.

Bevorzugt wird man die erfindungsgemäße Verbindungsanordnung in einem Fahrzeug (Kraftfahrzeug, Omnibus, Eisenbahn, Schiff, ...) einsetzen; sie kann aber auch ortsfest (Hotel, Konferenzraum, öffentliche Gebäude, ...) eingesetzt werden. Auch kann es sich um ein leichtes tragbares, handliches Gerät handeln. Derartige Geräte können dann beispielsweise von Fahrradfahrern, Wanderern, Joggern, Fußgängern, ... benützt werden.

In einer Ausführungsvariante weist die Telefoniereinrichtung ein Handfunktelefon auf, welches in eine Aufnahmeeinheit entnehmbar einlegbar ist. An der Aufnahmeeinheit sind gut erfühlbare Tasten angeordnet, mit denen periphere Einheiten anwählbar sind. Auch können durch diese Funktionstasten auszuwählende Daten abgerufen werden, welche dann an einem Display, welches in der Telefoniereinrichtung integriert sein kann oder separat ausgebildet ist, dargestellt werden. Die ausgewählten Daten können auch nach Herstellung einer Telefonverbindung bevorzugt auf einen entsprechenden Tastendruck übertragen werden. Die Aufnahmeeinheit ist insbesondere in einer Konsole einklinkbar halterbar, welche an einer Wand, beispielsweise an einer Verkleidungswand in einem Fahrzeug, angeordnet ist. Auch die Konsole (z. B. als Basisstation) kann mit Funktionstasten versehen werden. In vorteilhafter Weise werden die Funktionstasten jedoch an der Aufnahmeeinheit angeordnet. Die Aufnahmeeinheit ist mit einer lösbaren Stecker-Kabel-Verbindung mit der Konsole verbunden. Die Aufnahmeeinheit ist somit gegenüber der fest installierten Konsole leichter auswechselbar und kann somit für spezielle Kundenwünsche und Anwendungen mit den entsprechenden Tastenfunktionen bestückt werden.

In einer weiteren Ausführungsvariante weist die Teilnehmerwahleinrichtung illuminierte Wähltastenfelder auf, welche bevorzugt von der Steuereinrichtung je nach eingehender Dateninformation auf eine andere Illuminationsfarbe, bevorzugt auf einzelne Tasten oder Tastengruppen, geschaltet werden. So kann beispielsweise bei Notrufinformationen auf eine rote Farbe, welche man dann bevorzugt blinken läßt, geschaltet werden. Für allgemeine nachrichtentechnische Aufgaben wird man bevorzugt auf eine gelbe Farbe schalten. Ist z.B. die Telefoniereinrichtung auf "Freihören und -sprechen" geschaltet, kann man beispielsweise eine blaue Farbe wählen.

Weitere vorteilhafte Ausführungsbeispiele und Merkmalskombinationen ergeben sich aus der nachfolgenden Detailbeschreibung und der Gesamtheit der Patentansprüche.

Im folgenden werden Beispiele des erfindungsgemäßen Großraumfahrzeugs mit einer Teilnehmerstationen aufweisenden Verbindungsanordnung, welche nicht nur nachrichtentechnisch nutzbar ist, anhand von Zeichnungen erläutert. Weitere Vorteile der Erfindung ergeben sich aus dem nachfolgenden Beschreibungstext. Es zeigen:
- Fig. 1: ein Blockschaltbild einer nachrichtentechnischen Verbindungsanordnung eines erfindungsgemäßen Großraumreisefahrzeugs,
- Fig. 2: eine detaillierte Darstellung des in **Figur 1** gezeigten Blockschaltbilds,
- Fig. 3: eine perspektivische Darstellung einer beispielsweisen Teilnehmerstation in einem erfindungsgemäßen Großraumfahrzeug,
- Fig. 4: eine Variante zu der in **Figuren 1** und **2** dargestellten erfindungsgemässen Verbindungsanordnung,
- Fig. 5: eine Variante zu der in **Figur 3** dargestellten Teilnehmerstation,
- Fig. 6: einen Längsschnitt durch eine Ausführungsvariante zur erfindungsgemäßen Telefoniereinrichtung mit einem in eine Aufnahmeeinrichtung eingelegten, jedoch entriegelten und bereits hervorgehobenen Handfunktelefon, wobei eine Konsole zur Halterung der Aufnahmeeinrichtung nicht dargestellt ist; eine derartige Konsole zeigt im Querschnitt **Figur 8,**
- Fig. 7: eine Draufsicht auf die Aufnahmeeinrichtung der in **Figur 6** dargestellten Telefoneinrichtung bei herausgenommenem Handfunktelefon,
- Fig. 8: einen Längsschnitt durch die Aufnahmeeinrichtung bei eingelegtem Handfunktelefon in gegenüber den **Figuren 6** und **7** vergrößerter Darstellung,
- Fig. 9: einen Längsschnitt analog **Figur 6** in größerer Darstellung bei herausgenommenem Handfunktelefon,
- Fig. 10: einen Längsschnitt durch den unteren einen Stecker aufweisenden Bereich der Aufnahmeeinrichtung bei herausgenommenem Handfunktelefon und abgedecktem Stekker,
- Fig. 11: eine zu **Figur 10** analoge Darstellung jedoch mit eingestecktem Handfunktelefon,
- Fig. 12 und 13: ein Funktionsschema für eine Variante zu einer Steckerabdeckung.

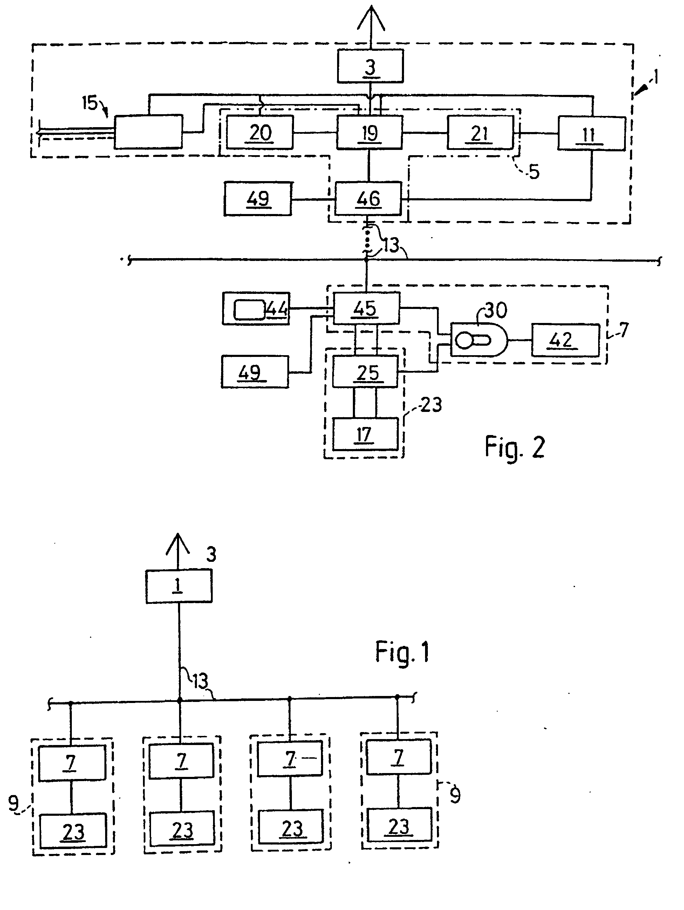

Das in **Figur 1** dargestellte Blockschaltbild einer nachrichtentechnischen Verbindungsanordnung eines Eisenbahnwaggons als beispielsweises Großraumreisefahrzeug hat eine zentrale Kommunikationseinrichtung **1** mit einer nach außen gehenden, mit der Außenwelt kommunizierenden Sende-Empfangsantenne **3.** Die Sende-Empfangsantenne **3** wird man bevorzugt gemäß GSM (**G**lobal **S**ystem for **M**obile Communication) oder dem amerikanischen Analogon ASM arbeiten lassen. Nachrichtentechnische Verbindungen können jedoch auch über AMPS, DAMPS, PCS, Bündelfunk, ... erfolgen. Die zentrale Sende- und Empfangseinheit **1** ist mit einer Dienstleistungsvermittlungseinrichtung **5** verbunden, deren Funktionen unten erläutert werden. Diese Dienstleistungsvermittlungseinrichtung **5** ist mit mehreren im Fahrzeug ortsfest angeordneten, jeweils eine Basisstation **7** aufweisenden Teilnehmerstationen **9** verbunden. Mit den Teilnehmerstationen **9** können weitere Teilnehmerstationen außerhalb des Fahrzeugs oder in einem anderen Fahrzeug sowie auch im gleichen Fahrzeug angeordnete Teilnehmerstationen **9** zur Kommunikation angewählt werden. Die jeweiligen Basisstationen **7** sind in Griffnähe ortsfest zum jeweiligen Sitzplatz eines Fahrgasts des Großraumreisefahrzeugs angeordnet.

Jedes Großraumfahrzeug, insbesondere jeder Eisenbahnwaggon, ist autark ausgerüstet. D.h. es müssen keine Energie- und Nachrichtenkabel für diese hier beschriebene Anwendung zwischen den einzelnen Waggons verkoppelt werden. Jeder Waggon hat seinen eigenen Stromgenerator als Teil einer Energieversorgungseinrichtung**11**. Die zu den einzelnen Sitzplätzen führenden Stromversorgungskabel **13** dienen gleichzeitig zur Übertragung nachrichtentechnischer Signale. Unter nachrichtentechnischen Signalen werden grundsätzlich alle sich vom Versorgungsstrom unterscheidenden Signale, wie Sprechverkehr, Informationssignale, Steuersignal, ... verstanden.

Als zentrale Kommunikationseinrichtung **1** weist jeder Waggon neben der Dienstleistungsvermittlungseinrichtung **5,** der Sende-Empfangsantenne **3** und der Stromversorgungseinrichtung **11** fakultativ eine zentrale Innenantenne **15** im Wageninneren auf, welche bevorzugt als Schlitzantenne ausgebildet ist. Diese Innenantenne **15** dient gemäß untenstehender Beschreibung wahlweise zur Kommunikation mit den einzelnen Handfunktelefonen **17** der Teilnehmerstationen **9.** In der Regel werden die einzelnen Handfunktelefone **17** jedoch mit der Sende-Empfangseinrichtung ihrer Basisstation **7** oder sofern vorhanden ihrer Aufnahmeeinheit **25** zusammenarbeiten.

Die Dienstleistungsvermittlungseinrichtung **5** hat eine Datenverarbeitungs-/Steuereinrichtung **19,** einen Informationsspeicher **20** sowie einen weiteren Speicher **21,** in dem für den Fernsprechverkehr sowie fiir einen Gebührenmodus benötigte Kennzeichnungen und Abrechnungsvorgänge abgelegt sind.

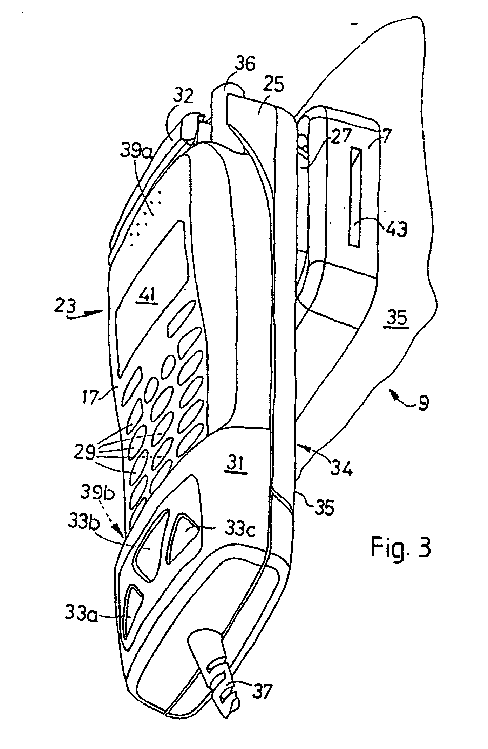

Jede Teilnehmerstation **9** hat die bereits obenerwähnte Basisstation **7** sowie eine Telefoniereinheit **23** mit dem oben bereits erwähnten Handfunktelefon **17.** Eine in die Basisstation **7** eingelegte Telefoniereinheit **23** zeigt **Figur 3.** Die hier gezeigte Basisstation **7** ist an der Rückseite **24** einer Rückenlehne eines Vordermannsitzes angeordnet; sie kann jedoch an der Waggonseitenwand oder an einem anderen vom Sitzplatz gut erreichbaren Ort angeordnet sein. Die Basisstation **7** ist als annähernd quadratische Konsole mit einer Innenmulde ausgebildet. Die Befestigung der Konsole **7** erfolgt in der Regel mit Schrauben. Die Innenmulde bildet das Gegenstück zu einem im oberen Teil einer Aufnahmeeinheit **25** angeformten Hörkapselteil **27.** Die Aufnahmeeinheit **25** als Aufnahmeeinrichtung ist bevorzugt schalenförmig ausgebildet und dient zur Aufnahme des Handfunktelefons **17.** Die Aufnahmeeinheit **25** ist mit einer nur schematisch dargestellten mechanischen Verriegelung in der Konsole **7** gehalten. Eine Verriegelungseinrichtung **30** ist lediglich im Blockschaltbild der **Figur 2** schematisch angedeutet. Im verriegelten Zustand kann weder die Aufnahmeeinheit **25** noch das Handfunktelefon **17** entnommen werden. Es kann auch über die Wähltastatur **29** des Handfunktelefons **17** keine nachrichtentechnische Verbindung aufgebaut werden. Die Aufnahmeeinheit **25** und die Konsole **7** sind bevorzugt aus Kunststoff in einem Spritzgußverfahren hergestellt.

Die Aufnahmeeinheit **25** hat im unteren Bereich ein köcherartiges Einsteckteil **31** und im oberen Bereich einen Verriegelungsschieber **32,** der im verriegelten Zustand über die Antenne **36** des Handfunktelefons **17** greift. Der Verriegelungsschieber **32** schnappt jeweils in seine Verriegelungsposition aufgrund einer federnden Halterung zurück. Zum Herausnehmen des Handfunktelefons **17** muß er nach links zur Freigabe der Antenne **36** und nach oben zur Freigabe des oberen Teils des Handfunktelefons **17** geschoben werden. Der Verriegelungsschieber **32** kann nur nach einer unten beschriebenen Entriegelung betätigt werden. Das Einsteckteil **31** ist nach vorne aufklappbar ausgebildet, wobei der Aufklappvorgang lediglich nach der Entriegelung durchführbar ist. Die Köchertiefe ist nur so groß gewählt, daß ein Halten des Handfunktelefons **17** möglich ist, jedoch dessen Wähltastatur **29** einwandfrei bedienbar bleibt. Die Funktionsbereitschaft der Tasten **29** zur Herstellung einer Teilnehmerverbindung ist jedoch nur gegeben, sofern auch eine Entriegelung erfolgt ist. Wie unten beschrieben, sind die Wähltasten **29** sowie weitere unten beschriebene Funktionstasten **33a** bis **33c** auf dem Einsteckteil **31** beispielsweise für waggoninteme, gebührenfreie sowie auch fiir gebührenpflichtige Informationen verwendbar. In der Rückwand **35** der Aufnahmeeinheit **25** etwa am gegenüberliegenden Ort des Einsteckteils **31** ist ein Mikrofon **34** angeordnet. Die Hörkapsel im Hörkapselteil **27** und das Mikrofon **34** sind über einen nicht dargestellten Kontaktstift beim Einlegen des Handfunktelefons 17 in die Aufnahmeeinheit **25** aktivierbar. Diese Aktivierbarkeit ist in der Regel bei verriegelter Nachrichtenverbindung unterbunden. Sie kann jedoch auch ausgehend von der Basisstation **7** ausgelöst werden, sofern für einzelne Fahrgäste von der Dienstleistungsvermittlungseinrichtung **5** ein entsprechender Befehl gesendet wird. In diesem Fall ist jedoch weder die Aufnahmeeinheit **25** noch das Handfunktelefon **17** entnehmbar. Über die als Lautsprecher wirkende-Hörkapsel im Hörkapselteil **27** können jedoch Informationen, wie beispielsweise Reiseinformationen (nächster Halt, Anschlußverbindungen, ...) abgegeben werden. Es könnten auch den einzelnen Reisenden speziell interessierende Informationen abgegeben werden. Auch könnte der Reisende Fragen beispielsweise an den Zugführer stellen.

Im Boden des Einsteckteils **31** sind Anschlußmittel als Interface für die energetische und signalmäßige Ankopplung des Handfunktelefons **17** vorgesehen. Die Aufnahmeeinheit **25** ist energetisch und signalmäßig mit einem Kabel **35** mit der Konsole **7** verbunden.

Das Handfunktelefon **17** weist neben den bereits obenaufgeführten Bedienelementen in seinem oberen Bereich eine Hörmuschel **39a** und in seinem unteren Bereich eine Sprechkapsel **39b** auf. Unterhalb der Hörmuschel **39a** ist ein Bildanzeigeelement **41** vorhanden.

Die Basisstation **7** hat eine Lese- und Verarbeitungseinheit **42** für Kreditkarten, deren Karteneinschiebeschlitz **43** in **Figur 3** sichtbar ist. Ferner ist in einer bevorzugten Ausführungsform neben der Konsole **7** ein lediglich im Blockschaltbild der **Figur 2** dargestellter Bildschirm **44** angeordnet, auf dem dem Reisenden Informationen angezeigt werden können.

In einem Eisenbahnwaggon als Großraumreisefahrzeug sind zu jedem Sitzplatz bereits Stromkabel **13** für in der Regel eine Leselampe verlegt. Damit nun neben dieser bereits bestehenden Verkabelung keine neuen Signalkabel zu den einzelnen Sitzplätzen eingezogen werden müssen, weist jede Basisstation **7** eine Entkopplungseinrichtung **45** auf, mit der auf der bereits bestehenden Verkabelung die Signale eingespeist bzw. ausgefiltert werden können. Eine entsprechende Entkopplungseinrichtung **46** befindet sich vor der Einrichtung **19.** Vor der zentralen Energieversorgungseinrichtung **11** ist eine weitere Entkopplungseinrichtung **47** angeordnet, damit auf dem Kabel **13** laufende Signale nicht kurzgeschlossen werden.

Zur Trennung von Versorgungsstrom - in der Regel Gleichstrom - und Signalübertragung kann nun mit unterschiedlichen Trägerfrequenzen und den entsprechenden Filtern gearbeitet werden. Es kann aber auch mit einer digitalen Verarbeitung unter Verwendung entsprechender digitaler "Erkennungscodes" gearbeitet werden. Auf diese Technik kann jedoch bei Verwendung der beispielsweisen sog. DECT (**D**igital **E**uropean **C**ordless **T**elecommunication)-Technik verzichtet werden.

Zum Aufbau einer nachrichtentechnischen Verbindung steckt nun der Reisende seine Kreditkarte in den Schlitz **43** der zur Basisstation **7** gehörenden Konsole. Die Kreditkarte wird nun mit der Leseeinheit **42** abgefragt. Je nach Kreditkartenart wird eventuell die Eingabe eines Sicherheitscodes gefordert. Die Forderung nach Eingabe dieses Codes wird auf dem Bildanzeigeelement **41** des Handfunktelefons **17** in einem entsprechenden Schriftzug dargestellt. Der Sicherheitscode kann nun über die Wähltastatur **29** eingegeben werden. Die Eingabe wird von der Basisstation **7** an die Einrichtung **19** über das Stromversorgungskabel **13** und die entsprechenden Entkopplungseinrichtungen **45** und **46** übermittelt. Stellt die Einrichtung **19** eine Berechtigung fest, so wird ein entsprechender Pfandbetrag von der Kreditkarte abgebucht oder dem Konto des Karteninhabers belastet sowie mit einer Verriegelungseinrichtung **48** die mechanische Verriegelung der Aufnahmeeinrichtung **25** in der Basisstation (Konsole) **7** und diejenige des Handfunktelefons **17** in der Aufnahmeeinrichtung **25** aufgehoben. Durch ein Nachlinksschieben und Nachobenwegdrücken des Verriegelungsschiebers **32** kann nun das Handfunktelefon **17** aus der Aufnahmeeinheit **25** entnommen werden. Das Handfunktelefon **17** kann aber auch in der Aufnahmeeinheit **25** belassen werden und lediglich die Aufnahmeeinheit **25** mit eingelegtem Handfunktelefon **17** aus der Basisstation **7** abgenommen werden, mit der jene über das Kabel **37** verbunden ist.

Als nächstes wird der Reisende über einen Schriftzug auf dem Bildanzeigeelement **41** aufgefordert, seine eigene Telefonnummer einzugeben. Eventuelle Gesprächsgebühren können nun dem Telefonkonto des Reisenden belastet werden. In einem weiteren Fragebefehl wird der Reisende befragt, welcher Telefoniereinrichtung - derjenigen im Zug oder seiner "heimatlichen" - bei einem ankommenden Anruf der Vorrang gegeben werden soll. Entscheidet sich der Reisende für einen Vorrang der "heimatlichen" Einrichtung, so wird jeder ankommende Anruf zuerst auf die heimatliche Telefoniereinrichtung umgeleitet und erst nach einer vorgegebenen Wartezeit auf diejenige im Zug gerührt.

Wird keine eigene Rufnummer angegeben, so kann der Reisende ebenfalls abgehende Gespräche führen. Seine Teilnehmerwahlverriegelung wird aufgehoben. Die Gesprächsgebühren werden dann analog der obenbeschriebenen Pfandabbuchung verrechnet. Erwartet der Reisende jedoch einen Rückruf, so kann er innerhalb einer vorgebbaren Zeitspanne mit einer ihm von der Einrichtung **19** zugeteilten und via Bildanzeigeelement **41** bzw. separatem Bildschirm **44** angezeigten Nummer angerufen werden. Aufgrund dieser Nummernzuteilung kann die Anzahl zur Verfügung zu stellender Tefonnummern niedrig gehalten werden.

Mit der Telefoniereinrichtung **23** können neben nachrichtentechnischen Verbindungen weitere Verbindungen und Informationen abgerufen werden. Mit der Wähltastatur **29** und den Funktionstasten **33a** bis **33c** im Zusammenhang mit dem Bildanzeigeelement **41** und dem separaten Bildschirm **44** kann die Telefoniereinheit **23** in eine multifunktionale "Einheit" verwandelt werden. Es können somit Informationen vom Informationsspeicher **20,** wie beispielsweise Zugverbindungen, Fahrkartenpreise, ... abgerufen werden. Auch können Aufträge, Einstellungen und Dienstleistungen, wie beispielsweise eine Beleuchtungssteuerung, Klimasteuerung, ein Kellnerruf, Bestellung von Fahrzeugen, Fahrkarten, Eintrittskarten, ... vorgenommen werden. D.h. es können periphere Subsysteme **49** angesteuert werden.

Anstelle einer fest zur Teilnehmerstation zugeordneten Telefoniereinrichtung **23** kann auch ein eigenes Handfunktelefon verwendet werden. Zu dessen optimaler Verwendung weist das Großraumreisefahrzeug eine zentrale Innenantenne **15** auf, welche mit der externen Sende-Empfangsantenne **3** zusammenwirkt. In diesem Fall weist die Basisstation **7** bevorzugt einen "Energieadapter" auf, von dem das Handfunktelefon den für seinen Betrieb benötigten Strom erhält und der ausreichend zum Aufladen dessen Akkumulators ist. Bevorzugt wird man diesen Adapter als sog. "Zigarettenanschluß" ausbilden, an den das betreffende Handfunktelefon mit einem Adapterkabel anschließbar ist.

Die obenbeschriebenen Telefoniereinrichtungen arbeiten bevorzugt als sog. schnurlose Einrichtungen. D.h. Basisstation **7** und Handfunktelefon **17** kommunizieren direkt über ihre Sende- und Empfangsanlagen. Verläßt ein Fernsprechteilnehmer nun seinen Waggon, weil er beispielsweise in den Speisewagen geht oder einen Bekannten in einem anderen Waggon besucht, so erfolgt dann die nachrichtentechnische Übertragung über die entsprechenden Kommunikationseinrichtungen **1** der entsprechenden Waggons.

Ein Bildanzeigeelement kann auch in der Aufnahmeeinheit **25** sowie auch in der Konsole der Basisstation **7** angeordnet werden.

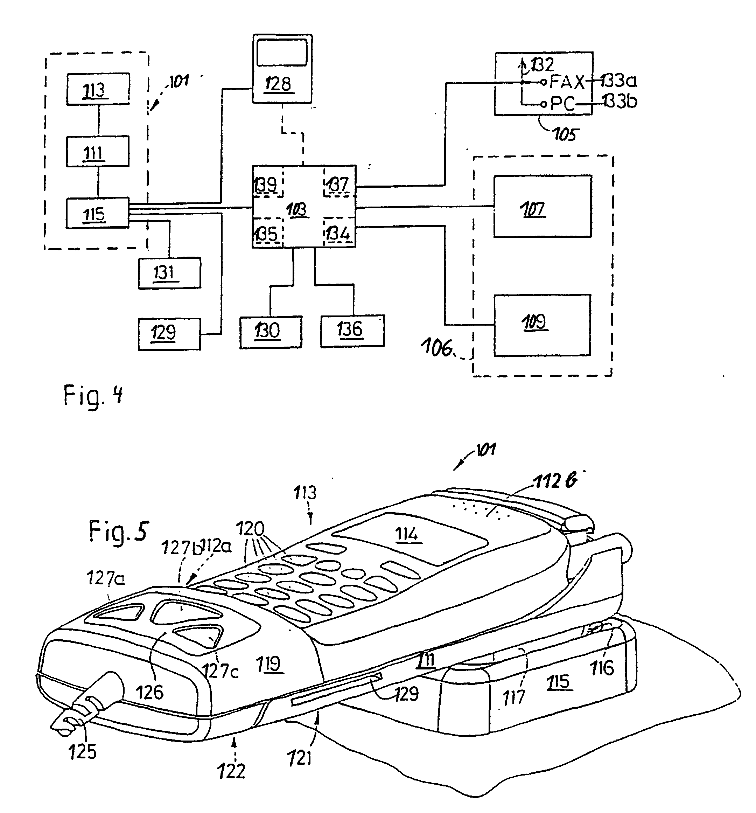

Die in einem Blockschaltschema in **Figur 4** dargestellte erfindungsgemäße Variante zu der in den **Figuren 1 und 2** dargestellten Verbindungsanordnung hat ebenfalls eine Telefoniereinrichtung **101** als Teilnehmerstation und eine Datenverarbeitungs-/Steuereinrichtung **103,** über die zusätzlich zu nachrichtentechnischen Einrichtungen **105** weitere periphere Einheiten **106** einwirken. Die nachrichtentechnischen Verbindungen erfolgen beispielsweise über GSM, AMPS, DAMPS, PCS, Bündelfunk,...

Unter die peripheren Einheiten **106** werden u.a. Baugruppen gerechnet, welche sich in unmittelbarer Umgebung der Telefoniereinrichtung befinden. Hierzu zählen aber auch Einheiten, welche über die nachrichtentechnische Verbindungsstrecke mit der Telefoniereinrichtung bzw. mit der an sie angeschlossenen Steuereinrichtung **103** in Verbindung treten. Einheiten aus dem Nahbereich der Telefoniereinrichtung sind beispielsweise bei einem Einsatz in einem Personenkraftwagen (PKW) [bei einem Großraumfahrzeug nicht unbedingt zugänglich für die Mitreisenden] Meßdatengeber, welche sich auf den Fahrzeugzustand (Diagnose) beziehen sowie auf die augenblicklichen Fahrgegebenheiten (Geschwindigkeit, Kraftstoffverbrauch, Position, welche mit einer GPS-Einheit ermittelt wird, ....). Unter diese augenblicklichen Fahrgegebenheitsmelder fallen auch Pannen- und Unfallmelder, welche beispielsweise eine Auslösung eines Airbags, eine große Beschleunigung durch beispielsweise einen Auffahrunfall melden. Die Einheiten des Nahbereichs können verallgemeinernd als Meß- und Informationsgeber bezeichnet werden.

Zu Einheiten, welche erst über eine nachrichtentechnische Verbindungsstrecke zugeschaltet werden, gehören beispielsweise Datenbanken, von denen Fahrtrouteninformationen abgefragt werden können. Insbesondere zählen hierzu auch die unten im Detail beschriebenen Verbindungen zu Bankinstituten, welche ein monetäres Nachladen einer Kreditkarte ermöglichen.

Auf der Vorderseite **126** des Einsteckteils **119** der Telefoniereinrichtung **101** sind drei Funktionstasten **127a** bis **127c** derart angeordnet und ausgebildet, daß sie ohne Blickkontakt findund betätigbar sind. Die Funktionstasten **127a** bis **127c** sind gegen Fehlbedienung geschützt angeordnet Bevorzugt wird man sie deshalb versenkt anordnen. Die Tastenfunktionen der Funktionstasten **127a** bis **127c** unterscheiden sich von den Funktionen der Wahltasten **120** des Handfunktelefons **113;** sie können jedoch analog zu diesen auch eine Farbumschaltung haben. Im Gegensatz zu diesen haben sie keine den allgemeinen Fernsprechverkehr beeinflussende Funktion. Ihre Funktionen sind hier im Fahrzeug fahrzeugspezifisch ausgerichtet Bei einer ortsfesten Verwendung der Verbindungseinrichtung sind die Tastenfunktionen dann auf den betreffenden Ort bezogen, wie beispielsweise dem eines Hotels zu dem eines Kellners, der Rezeption, ... Der Einsteckteil **119** hat hier im Gegensatz zur Ausführung in **Figur 3** an seiner Längsseite einen Schlitz **129** mit einer Kartenlese- und einer Dateneinspeichereinheit **129b.** Die mit der Kartenlese- und Dateneinspeichereinheit **129b** vom eingeschobenen Authentisierungsmittel gelesenen Daten werden von einer bevorzugt im Einsteckteil **119** angeordneten Authentisierungseinheit **130** ausgewertet. Die Authentisierungseinheit ist signalmäßig mit der Einrichtung **103** verbunden, wie im Blockschema **Figur 4** dargestellt ist. Der Schlitz **129** kann nur eine einseitige Öffnung aufweisen oder auch durchgehend sein. Ein durchgehender Schlitz erleichtert das Einschieben mehrerer Identifizierungmittel mit unterschiedlichen Datensätzen. Die Wirkungsweise von Authentisierungseinheit **130** und -mittel wird unten beschrieben.

Die Aufnahmeeinheit **111** stellt hier den Übergang vom "landläufigen" Handfunktelefon **113** zu speziellen Gegebenheiten des Fahrzeugs oder des Orts dar. Die Konsole **115** ist für die signalmäßige Anpassung zwischen der Telefoniereinrichtung **101** und der Steuereinrichtung **103** sowie für zusätzliche am Ort bzw. im Fahrzeug anzubringende Informationsgeber, insbesondere zusätzliche Bildschirmeinheiten **128,** zuständig. D.h. sie wirkt bei der Datenaufbereitung für den Benützer mit. Ferner ist die Konsole **115** für die energiemäßige Versorgung **131** von Handfunktelefon **113,** Aufnahmeeinheit **111** sowie unten aufgeführten weiteren Einheiten, wie z. B. von Informationsausgabegeräten zuständig. Zur energiemäßigen Versorgung zählen auch Einrichtungen zum Aufladen entsprechender Akkumulatoren.

Die Bildschirmeinheit **128** kann nun, wie in **Figur 5** angedeutet ist, als separates Element ausgebildet sein. Sie kann jedoch auch in der Aufnahmeeinrichtung (beispielsweise unterhalb der Funktionstasten) oder am Handfunktelefon (zusätzlich zum Display **114** im Bereich der Hörkapsel **112b)** angeordnet sein.

Sofern die Verbindungseinrichtung in einem Fahrzeug eingesetzt ist, ist die Steuereinrichtung **103** nachrichtentechnisch mit einer Fahrzeugantenne **132** verbunden. Auch können Verbindungen **133a** und **133b** zu einem Faxgerät oder einem Computer [PC] vorhanden sein.

Nachfolgend wird der Einsatz der erfindungsgemäßen Verbindungseinrichtung in einem ortsbeweglichen Fahrzeug, hier bevorzugt in einem Personenkraftwagen, beschrieben. Neben den oben beispielsweise aufgeführten nachrichtentechnischen Einrichtungen ist die Steuereinrichtung **103** mit den peripheren Einheiten **106,** hier fahrzeugspezifischen Einrichtungen, verbunden. Als fahrzeugspezifische Einrichtungen sind hier beispielsweise zu sehen:
- Satellitenpositioniereinrichtungen [GPS (Global Positioning System)],
- Fahrzeugdiagnoseeinrichtung (Motorzustand, ..., Türen und/oder Fenster geschlossen ja/nein,...)
- Einrichtungen betreffend das Fahrverhalten, wie Benzinabstellung, Abstellung der elektrischen Energieversorgung, Ent- und Verriegelung der Fahrzeugtüren,
- Überwachung der Airbagauslösung.

Die Einrichtung **103** weist einen Rufnummernspeicher **134,** einen Rufnummernwähler **135** sowie einen Sprachgenerator **136** auf, der automatische Meldungen, insbesondere bei einem Unfall an eine Notrufzentrale entsprechend von Meldungen und Messungen der fahrzeugspezifischen Einrichtungen als peripheren Einheiten **106** im Fahrzeug abgeben kann. In Abhängigkeit der über die Antenne **132** bzw. von den fahrzeugspezifischen Einrichtungen abgegebenen bzw. von der Einrichtung **103** abgefragten Meß- und/oder Informationsdaten wird aus dem Rufnummernspeicher **134** eine Rufnummer ausgewählt und mit dem Rufnummernwähler **135** selbsttätig die entsprechende Verbindung hergestellt und falls vorgesehen vom Sprachgenerator oder einem abgespeicherten Sprechdatensatz eine entsprechende Mitteilung ausgesandt bzw. abgegeben.

Beispielsweise wird das obenaufgeführte Verfahren dann ausgeführt, wenn bei einem Unfall der Airbag ausgelöst worden ist. Eine der fahrzeugspezifischen Einrichtungen stellt die Airbagauslösung fest; es muß sich somit ein Unfall ereignet haben. Hierauf sucht der Rufnummernwähler **135** aus dem Rufnummernspeicher **134** die Notfallnummer heraus und stellt die entsprechende nachrichtentechnische Verbindung her. Gleichzeitig ermittelt die Satellitenpositioniereinrichtung den Ort des Fahrzeugs und gibt diesen selbsttätig an die Notfallstation weiter. In einem nächsten Schritt wird die in der Konsole **115** eingebaute Hör- und Sprechmuschel auf Freihören und -sprechen umgeschaltet. (Es kann auch auf separate, sofern vorhanden, im Fahrzeug angeordnete Mikrofone und Lautsprecher fiir Freihören und -sprechen umgeschaltet werden.) Eventuell verletzte Fahrzeuginsassen sind nun selbsttätig mit der Unfallstation akustisch verbunden.

Unabhängig von einer automatischen Herstellung einer Notrufverbindung über die beispielsweise Airbag-Auslösung kann die Notrufverbindung auch über Drücken einer entsprechenden Funktionstaste, beispielsweise der mittigen Funktionstaste **127b,** erfolgen.

Neben einem Rufnummernspeicher **134** verfügt die Einrichtung **103** über einen Speicher **137** für fahrzeugspezifische Betriebsdaten (gefahrene Kilometer, Geschwindigkeit in Abhängigkeit der Fahrzeit, Servicedaten, ...) sowie eine Einrichtung **139** zur Zugriffskontrolle auf diesen Speicherinhalt.

Über einen nachrichtentechnischen Anruf der im Fahrzeug installierten Verbindungseinrichtung und anschließender Anwahl eines Sicherheitscodes stellt die Einrichtung **139** fest, daß der Anrufer berechtigt ist, den Inhalt bzw. Inhaltsteile des Speichers **137** auszulesen. Je nach Ausgestaltung der Verbindungseinrichtung kann nun der Anrufer direkt auslesen, oder der Fahrzeugführer muß über eine der Funktionstasten **127a** bis **127c** sein Einverständnis quittieren.

Auch kann vorgesehen werden, mittels eines Anrufs nach Identifizierung und/oder einer unten beschriebenen Authentisierung ein Fahrzeug zu entriegeln. Hierdurch kann das Fahrzeug ohne aufwendige Hilfestellung mechanischer Werkstätten wieder benützt werden, falls der Fahrzeugschlüssel im Innern des Fahrzeugs vergessen wurde oder anderweitig abhanden gekommen ist. Auch könnte völlig auf die Verwendung von Fahrzeugschlüsseln verzichtet werden, da das Fahrzeug über ein herausgenommenes Handfunktelefon oder jedes andere Telefongerät durch einen Anruf und bevorzugt einer Eingabe eines Codes aufschließbar wäre. Die Sicherheit gegen unbefugtes Benützen ist durch einen Sicherheitscode gegeben.

Es kann auch über die Steuereinrichtung **103** und insbesondere die separate Bildschirmeinheit **128** eine Verkehrsleitung des Fahrzeugs vorgenommen werden [Verkehrstelematik].

Bei der Entwendung eines Fahrzeugs, welches die obenbeschriebene erfindungsgemäße Verbindungseinrichtung aufweist, kann nun auf Telefonanruf und nachfolgender Identifizierung die Ortskoordinate des Fahrzeugs mittel GPS ermittelt werden. Nach Ermittlung der Koordinaten oder auch schon vorher kann dann durch die Steuereinrichtung entweder die KraftstoffZuführung oder die Zündung unterbrochen werden; auch kann das Fahrzeug bis zum Eintreffen der Polizei selbsttätig verriegelt werden.

Bevorzugt wird man bei einem entwendeten Fahrzeug nicht an einem beliebigen Ort die Zündung oder die Kraftstoffzuführung unterbrechen, sondern dies erst nach einem Fahrzeugstillstand von mehr als ein bis zwei Minuten vornehmen. Man ist in diesem Fall sicher, daß sich das Fahrzeug nicht mehr im Verkehrsfluß befindet und somit bei einem Stillstand auch keine anderen Verkehrsteilnehmer gefährdet werden. Nach dem Zwangsstillstand können dann die Ortskoordinaten festgestellt werden [GPS (Global Positioning System)].

In einer bevorzugten Ausführungsvariante ist das Handfunktelefon mit illuminierbaren Wahltasten ausgebildet, deren Illuminationsfarbe, Illuminationsdauer und Illuminationstastverhältnis bevorzugt von der Steuereinrichtung aufgrund von Meß- und Informationsdaten der peripheren Geber einstellbar ist. Hierdurch kann der Fahrzeuglenker je nach Auslegung an durchzuführende Servicearbeiten erinnert werden. Auch können hiermit Alarmmeldungen initiiert werden.

Im Gegensatz zum Einbau der erfindungsgemäßen Verbindungseinrichtung in Fahrzeugen kann auch ein ortsfester Einbau erfolgen.

Auch kann anstelle eines Handfunktelefons mit Aufnahmeeinrichtung und Konsole ein "multifunktioneller" Handapparat bevorzugt mit integriertem Bildanzeigeelement (Display) verwendet werden. Mit den Funktionstasten **127a** bis **127c** sowie eventuell weiterer Funktionstasten kann dann neben einer automatischen Umschaltung durch die Steuereinrichtung in Abhängigkeit von Meldungen peripherer Geräte auf unterschiedliche Funktionen umgeschaltet werden. Diese unterschiedlichen Funktionen wird man dann bevorzugt durch eine unterschiedliche Illumination der Wahltasten beim Handapparat sowie auch, sofern möglich, beim Handy anzeigen. Durch die Funktionsumschaltung wird das Handy bzw. der Handapparat von einem nachrichtentechnischen Gerät in ein "Funktionsterminal" umgeschaltet, was durch eine entsprechende Tastenillumination kenntlich gemacht ist. Anstatt einer unterschiedlichen Farbgebung können auch unterschiedliche Blinkzyklen verwendet werden.

Die einzelnen Schnittstellen zwischen Handfunktelefon, Aufnahmeeinrichtung, Konsole und Steuereinrichtung müssen nicht in der obenaufgeführten Art gestaltet werden. Man wird sie zweckmäßigerweise derart gestalten, daß die einzelnen Baugruppen möglichst universell einsetzbar sind, und eine Individualisierung für den speziellen Einsatz der Verbindungseinrichtung entweder mit den Verbindungsstrecken oder nur mit einigen wenigen Baugruppen erfolgt.

Auch kann das Handfunktelefon mit einer Schließeinrichtung in der Aufnahmeeinrichtung verriegelbar sein. Das Handfunktelefon wäre dann nur entnehmbar, wenn die mit der Steuereinrichtung **103** verbundene Authentisierungseinheit **130** nach Einführen einer Kreditkarte oder einem analogen kartenartigen Datenträger in den Schlitz **129a** einen Entriegelungsbefehl an die Schließeinrichtung gibt. Der Entriegelungsbefehl könnte gegeben werden, sofern der Kartenleser von der Kreditkarte einen Sicherheitsbetrag (Pfand) als Gegenwert für das Handfunktelefon abgebucht hätte. Dieser Betrag wird dann nach dem Rückstecken des Handfunktelefons in die Aufnahmeeinrichtung und dessen Verriegelung wieder gutgeschrieben. Eine Telefoniergebührenverrechnung erfolgt mit den bisher üblichen Maßnahmen.

Die Kartenlese- und Datenspeichereinheit **129b** ist bevorzugt zusätzlich zu der bereits im Handfunktelefon angeordneten in der Aufnahmeeinheit **111** vorhanden. D.h., es ist eine erste Karte für die normale nachrichtentechnische Verbindung zu anderen Teilnehmern notwendig [GSM-Betrieb (Global System for Mobile Communications), AMPS, DAMPS, PCS, Bündelfunk]. Die zweite in den Schlitz **129a** einzusteckende Karte (Chip-Karte, Karte mit Magnetstreifen, ...) kann nun aus einem internen Speicher abrufbare Steuerungsbefehle haben; sie kann aber auch als Speichermedium für Fahrzeugdaten dienen. Sie kann beispielsweise als "Fahrtenschreiber" fungieren, laufend Fahrzeugdaten derart aufnehmen und überschreiben, daß jeweils nur ein "letzter" Fahrzeugzustand gespeichert ist Dieser "letzte" Fahrzeugzustand kann dann bei einem Unfall ausgewertet werden, um möglichst eindeutig die Schuldfrage abklären zu können. Anstelle der beiden Karten kann jedoch nur eine einzige verwendet werden, deren aufgebrachte Daten jedoch dann derart angeordnet sind, daß ein allgemeiner Fernsprechverkehr führbar ist und die obenangeführten geschützten Funktionen abgerufen und bearbeitbar sind.

Mit der erfindungsgemäßen Verbindungsanordnung können nun unter speziellem Einsatz der in der Aufnahmeeinheit **111** angeordneten Authentisierungseinheit **130** mit abgespeicherten Authorisierungsdaten und/oder -algorithmen, sowie eine transportable Einheit mit zu diesem Authorisierungsdaten- bzw. verarbeitungssatz schlüsselartig passenden anderen Authorisierungsdatensatz sicherheitsmäßig sensitive Daten übertragen werden. Zu diesen sensitiven Daten zählt z. B. das Wiederaufladen eines Geldbetrags auf einer Kreditkarte, einer sog. "Pay-CARD".

Um ein Wiederaufladen eines Geldbetrags auf einer Kreditkarte zu erreichen, wird diese in den Schlitz **29a** eingeführt und die Telefonnummer des Bankinstitutes mit den Wahltasten **120** angewählt. Nach Herstellen der Verbindung erscheint auf dem Display **114** die Aufforderung, eine Kennziffer, in der Regel wird es die PIN-Nummer der Kredit-Karte sein, einzugeben. Nach Eingabe der Kennziffer führt die Authentisierungseinheit **130** die entsprechenden sicherheitsmäßigen Datenverarbeitungen durch und übermittelt dem angewählten Bankinstitut einen kodierten Zustimmungsbefehl. Nach Erhalt des Zustimmungsbefehls wird bankseitig ein Signal zur Zugriffskontrolleinheit **139** gesandt. Sendet auch diese Einheit **139** eine Zustimmung, wird der authentisierte Fernsprechteilnehmer aufgefordert, über die Wahltasten **120** den gewünschten Geldbetrag einzugeben. Anschließend erfolgt die Übertragung auf die Kreditkarte.

Bei einer falschen Eingabe der PIN-Nummer wird der das Handfunktelefon bedienende Teilnehmer zu einer erneuten Eingabe aufgefordert. Nach einer dritten Aufforderung infolge falscher PIN-Nummern-Eingabe wird angenommen, daß es sich um einen unberechtigten Geldübertragungsversuch handelt. Die Verbindung zum Bankinstitut wird abgebrochen. Zusätzlich kann nun vorgesehen werden, daß die Kreditkarte im Schlitz **129a** eingeklemmt wird. Eine eingeklemmte Karte kann dann nur vom Bankinstitut wieder befreit werden. Bevorzugt wird man, da der Herstellungspreis für eine Aufnahmeeinheit **111** gering ist, eine nicht mehr lösbare Klemmung, beispielsweise infolge eines Durchstanzens der Kreditkarte vornehmen [ungültig machen]. Beim Bankinstitut ist dann eine neue Karte zusammen mit einer neuen Aufnahmeeinheit **111** nach entsprechender Identifizierung erhältlich.

Karte und Authentisierungseinheit **130** können beispielsweise mittels eines nicht reproduzierbaren Zufallsgenerators mit nur zu ihnen schlüsselartig passenden Datensätzen versehen werden. In diesem Fall wird man die Authentisierungseinheit derart in der Aufnahmeeinheit **111** anordnen, daß sie nicht auslesbar und auch nicht entfern- bzw. auswechselbar ist. Entfernen sowie Auslesen sind nur nach einer mechanischen Zerstörung möglich. Der Inhaber der Telefoniereinrichtung bzw. der Kontoinhaber kann an einer zerstörten Aufnahmeeinheit Manipulationen leicht erkennen und entsprechend seine Bank informieren.

Da die spezielle "Intelligenz" nur in der Aufnahmeeinheit **111** sitzt, kann diese nach Umstekken des Kabels **25,** welches genormte Anschlüsse aufweist, mit jeder beliebigen Konsole **115** verbunden werden. Auch kann nahezu jedes beliebige Handfunktelefon **113** verwendet werden; es muß nur einlegbar sein.

Anstatt Authorisierungsdaten auf einer Karte abzuspeichern, können auch persönliche Daten des Eigentümers der Telefoniereinrichtung in der Aufnahmeeinheit abgelegt werden. Als persönliche Daten können beispielsweise dessen Tonfall, die zeitliche sowie auch andruckmäßige Abfolge einer Tastenwahl, ein Fingerabdruck oder eine Erkennung der Ohrmuschel sowie der Iris eines seiner Augen verwendet werden.

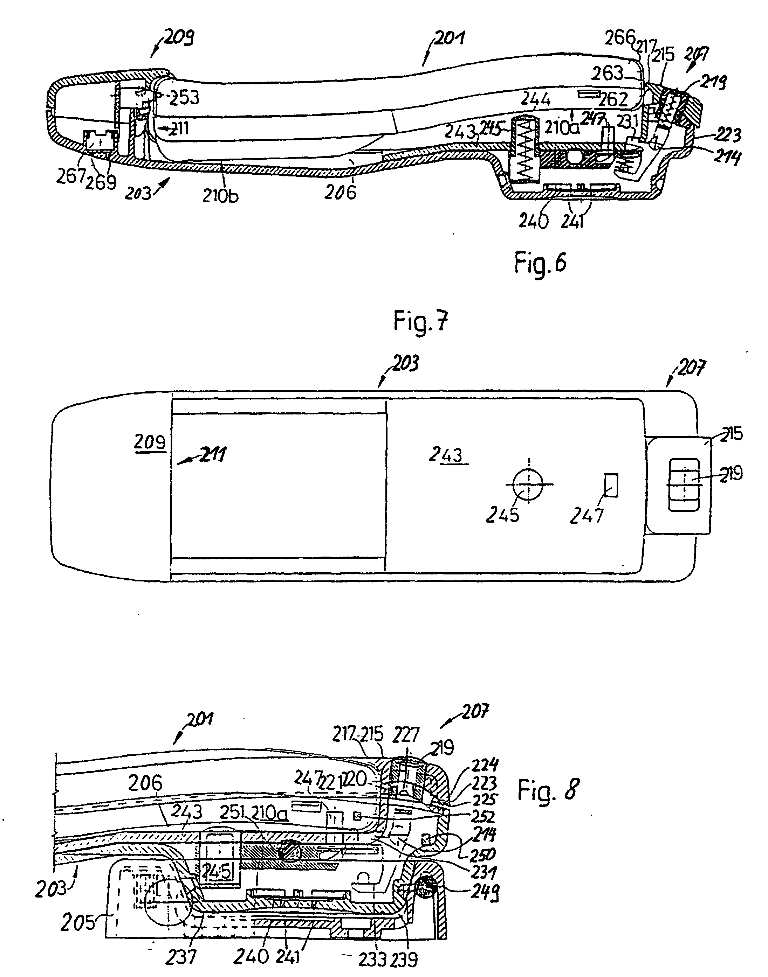

Das die Telefoniereinrichtung mit entnehmbarem Handfunktelefon (Handy) in Fahrzeugen eingesetzt wird, von beliebigen Personen bedienbar sein soll und demzufolge eine gewisse "Narrensicherheit" aufweisen soll, wird eine nachfolgende Ausführungsvariante, wie sie in den Figuren 6 bis 13 dargestellt ist, vorgeschlagen.

Hierzu ist ein aus dem Aufnahmeraum der Aufnahmeeinrichtung herausnehmbares Handfunktelefon mit wenigstens einer seinen Oberflächenbereich beim Einlegen selbsttätig übergreifenden Haltesicherung gesichert halterbar und zur Entnahme nach Entriegelung der Haltesicherung selbsttätig durch ein Hervorschiebeelement teilweise aus der Aufnahmeeinrichtung zum guten Ergreifen herausschiebbar. Um eine gute Handhabung zu gewährleisten, ist vorzugsweise die Haltesicherung im oberen Bereich der Aufnahmeeinrichtung in deren Schmalseite, also benachbart zum Hörmuschelteil des eingelegten Handfunktelefons, angeordnet.

Die Freigabe des eingelegten Handfunktelefons erfolgt in vorteilhafter Weise durch eine Bewegung eines Halteelements der Haltesicherung parallel zu dessen Längsachse. Um diese Bewegung auslösen zu können, muß erst ein Auslöseknopf eingedrückt werden, dessen Knopfoberseite nur geringfügig über die Oberfläche des Halteelements hervorsteht. Das Überstehen ist derart gewählt, daß eine gute Ertastbarkeit gegeben ist. Eine Auslösung (Freigabe) ist erst durch ein Eindrücken unter die Oberfläche des Halteelements gegeben, wobei der Eindrückweg so groß gewählt ist, daß eine unwillkürliche Berührung keine Auslösung bewirkt.

Um ein "Klappern" des Handfunktelefons in der Aufnahmeeinrichtung bei "rauhen" Umgebungsbedingungen, wie sie in einem fahrenden Fahrzeug beispielsweise gegeben sind, zu verhindern, muß dieses satt in der Aufnahmeeinrichtung einliegen. Infolge von Temperatur- und Materialunterschieden zwischen Handfunktelefon und Aufnahmeeinrichtung können beide klemmen. Um dennoch ein einwandfreies Herausnehmen zu gewährleisten, wird das Handfunktelefon bei der Freigabe zur Entnahme mit einem Hebel als Hervorschiebeelement aus der Aufnahmeeinrichtung um einen kleinen Wegbereich angehoben und dann mit einer Druckfeder, welche bevorzugt in der Aufnahmeeinrichtung unterhalb des Hörmuschelteils des Handfunktelefons angeordnet ist, in Griffposition gebracht.

Die Übertragung elektrischer Energie und/oder Signale erfolgt zwischen Handfunktelefon und Aufnahmeeinrichtung über einen Stecker, der bevorzugt im unteren Bereich der Aufnahmeeinrichtung angeordnet wird. Damit in diesen Bereich hineinfallende Metallgegenstände, wie Münzen, Haar- und Büroklammern, ... keinen Kurzschluß über den Kontakten des Steckers auslösen können, ist in einer Ausführungsvariante eine Steckerabdeckung vorgesehen. Bei herausgenommenem Handfunktelefon ist der Stecker immer abgedeckt. Erst beim Einschieben werden die Kontakte freigegeben.

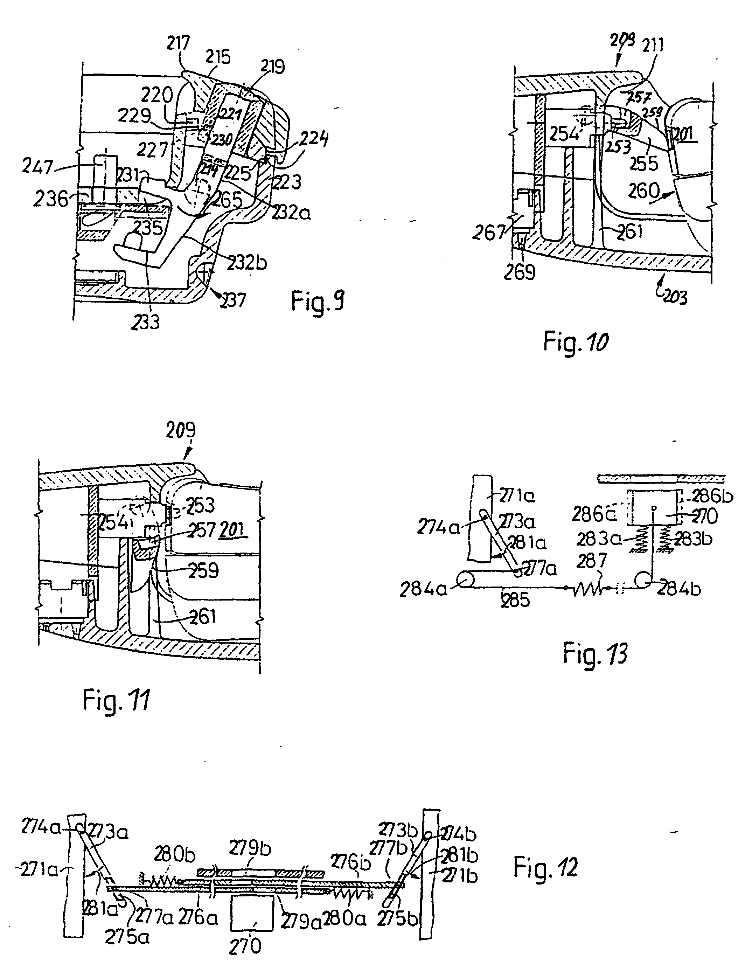

Das in **Figur 7** dargestellte Telefongerät, wie es insbesondere in Fahrzeugen eingesetzt wird, hat ein Handfunktelefon **201** und eine Aufnahmeeinrichtung **203.** Weitere Ausbildungen von Aufnahmeeinrichtungen **203** sind beispielsweise in der WO-A 97/00792 beschrieben. Gehalten wird die Aufnahmeeinrichtung **203** z. B. an der Fahrzeugverkleidung des Fahrzeugs mit einer Konsole **205,** in die sie entnehmbar eingeklinkt ist. Konsole **205** und Aufnahmeeinrichtung **203** sind über ein nicht dargestelltes Kabel energetisch und signalmäßig miteinander verbunden. Die Konsole **205** enthält ferner eine nicht dargestellte Sende- und Empfangseinheit für vom Handfunktelefon **201** via Antenne ausgesandte Signale. Das Handfunktelefon **201** ist in einem Aufnahmeraum **206** der Aufnahmeeinrichtung **203** herausnehmbar mit je einer seinen oberen sowie seinen unteren Oberflächenbereich übergreifenden Haltesicherung **207** und **209** gesichert gehalten. Die Haltesicherung **207** greift über einen Oberflächenbereich an der Schmalseite des Hörmuschelteils und die Haltesicherung **209** über einen Oberflächenbereich des Sprechmuschelteils **210a** bzw. **210b.** Die Haltesicherung **209** ist starr und als Vertiefung **211** im unteren Bereich **212** der Aufnahmeeinrichtung **203** ausgebildet und in den **Figuren 10** und **11** dargestellt.

Bei in den Aufnahmeraum **206** eingelegtem Handfunktelefon **201** fällt dessen Längsmittellinie **213** mit derjenigen der Aufnahmevorrichtung **203** sowie deren Aufnahmeraum **206** zusammen. Die Haltesicherung **207** ist um eine senkrecht zur Längsachse **213** verlaufende Schwenkachse **214** verschwenkbar ausgebildet. In den **Figuren 6** und **8** ist die Haltesicherung **207** im verriegelten Zustand und in **Figur 9** im entriegelten Zustand dargestellt. Die Haltesicherung **207** hat ein Halteelement **215** mit einer Nase **217,** welche im verriegelten Zustand über einen Oberflächenbereich im schmalseitigen Randbereich des Hörmuschelteils **210a** greift. Die Haltesicherung **207** hat einen federnd gehaltenen Auslöseknopf.**219,** der senkrecht zur Schwenkachse **214** in das Halteelement **215** hineindrückbar ist. Die Oberseite des Auslöseknopfes **219** steht soweit aus der Oberfläche des Halteelements **215** hervor, daß die Knopfoberfläche gerade gut ertastbar ist. Der Querschnitt ist so groß gewählt, daß er mit einem Finger gut in das Halteelement **215** eindrückbar ist. Der Querschnitt, das Überstehen und der Auslöseweg sind derart gewählt, daß eine gute Ertastbarkeit gegeben ist, eine ungewollte Auslösung jedoch weitgehendst unterbunden ist.

Der Auslöseknopf **219** hat einen Nippel **221,** der bei verriegelter Haltesicherung **207** in eine Nut **220** der Basis **223** des oberen Verbindungsteils der Aufnahmeeinrichtung **203** greift. Eine Schwenkbewegung der Haltesicherung **207** ist erst nach einer Herausnahme des Nippels **221** aus der Nut **220** möglich. Beim Herabdrücken des Auslöseknopfes **219** wird der Nippel **221** aus der Nut **220** herausgeschoben; siehe insbesondere **Figur 9.** Bei herausgeschobenem Nippel **221** ist die Haltesicherung **207** parallel zur Längsachse **213** nach außen um die Schwenkachse **214** schwenkbar, bis eine untere Kante **224** des Halteelements **215** an einer Ausnehmung **225** in der Basis **223** anschlägt. Gleichzeitig rastet der Nippel **221** in einer weiteren Nut **227** ein. Die Haltesicherung **207** ist in ihrer Offenposition fixiert. Im Gegensatz zur relativ tiefen steilen, vom Aufnahmeraum **206** abgewandten Wand **229** der Nut **220** ist die zum Aufnahmeraum **206** hingewandte Wand **230** der Nut **227** weniger tief und zudem abgeschrägt ausgebildet. Die Ausbildung der Wand **230** erlaubt beim Einlegen des Handfunktelefons **201,** wie unten beschrieben, ein Herausgleiten des Nippels **221** bis zum erneuten Einrasten in die Nut **220.**

Die Haltesicherung **207** ist als zweiarmiger, um die Schwenkachse **214** schwenkbarer Hebel ausgebildet. An dem einen Hebelarm **232a** ist das Halteelement **207** mit dem Auslöseknopf **219** angeordnet und am anderen Hebelarm **232b** das Hervorschiebeelement **231** für das Handfunktelefon **201** und eine Aufnahme **233** für eine Druckfeder **234,** welche in den **Figuren 8** und **9** nicht dargestellt ist. Das Hervorschiebeelement **231** ist als Ausleger annähernd senkrecht zum Hebelarm **232b** ausgebildet und ragt durch eine Öffnung **235** im Boden **236** der Aufnahmeeinrichtung **203** in deren Aufnahmeraum **206** bei herausgenommenem Handfunktelefon **201** hinein.

Die Aufnahmeeinrichtung **203** ist in ihrem oberen Teil auf der Rückseite mit einer vorstehenden topfartigen Ausbuchtung **237** versehen. Die Kontur dieser Ausbuchtung **237** ist der Mulde **239** der untenbeschriebenen Konsole **205** angepaßt. Sie ist bevorzugt viereckig mit abgerundeten Ecken ausgebildet; es können aber auch andere Formgebungen verwendet werden. Die Ausbuchtung **237** trägt eine Hörmuschel **240** mit akustisch transparenten Kanälen **241** zu ihrer Aussenseite und ist mit einer Abdeckung **243** als Teil des Bodens **236** gegen den Aufnahmeraum **206** abgedeckt. Durch die Abdeckung **243** greift ein mit einer Druckfeder **244** versehener Stössel **245** zum Hervorschieben des freigegebenen und bereits angehobenen Handfunktelefons **201** aus dem Aufnahmeraum **206.** Ferner greift ein Antennenstecker **247** durch diese Abdeckung **243.**

Die Konsole **205** weist klinkenartige Halteelemente auf, welche die Aufnahmeeinrichtung **203** herausnehmbar halten. Eines dieser Halteelemente ist in **Figur 8** am Ort A dargestellt. Ferner hat die Konsole **205** einen Magneten **249,** der mit einem "Reed-Schalter" **250** eines Reed-Relais zusammenwirkt. Dieses Reed-Relais schaltet bei in die Konsole **205** eingelegter Aufnahmeeinrichtung **203** auf sog. Freihören und Freisprechen um.

Auch in der Aufnahmeeinrichtung **203** ist ein Magnet **251** vorhanden, der mit einem Reed-Schalter **252** zusammenarbeitet und bei in die Aufnahmeeinrichtung **203** eingelegtem Handfunktelefon **201** dessen Hör- und Sprechmuschel ausschaltet und diejenigen der Aufnahmeeinrichtung **203** einschaltet.

Die elektrische Energie- und/oder Signalübertragung zwischen der Aufnahmeeinrichtung **203** und dem Handfunktelefon **201** erfolgt über einen in den **Figuren 10** und **11** schematisch dargestellten Stecker **253** als Interface in der Vertiefung **211.** Der Stecker **253** ist mit einer um eine Schwenkachse **254** schwenkbaren Steckerabdeckung **255** abdeckbar. Die Schwenkachse **254** verläuft senkrecht zur Längsachse **213.** Die Steckerabdeckung **255** ist schwertartig, in Analogie zu einem Schwert eines Segelschiffes, ausgebildet und ist mit einer nicht dargestellten Feder selbsttätig in die in **Figur 10** gezeigte Position bringbar. D.h. in einer weiteren Analogie wie das Schwert eines Surfbrettes einklappbar. Die Steckerabdeckung **255** hat zur Aufnahme des Steckers **253** einen an nur einer Seite begrenzten und mit einer "Überdachung" versehenen Hohlraum **257.** Dieser Hohlraum **257** kann nun derart ausgebildet werden, daß die gesamte Steckerleiste mit einem durchgehenden Hohlraum überdeckt wird oder fiir jeden Kontaktstift eine Kammer gebildet ist. Beim Einlegen des Handfunktelefons **201** in die Aufnahmeeinrichtung **203** gleitet die Seite **259** der Steckerabdeckung **255** an der unteren Stirnseite **260** des Handfunktelefons **201** unter Einschwenken in eine Öffnung **261** in der Vertiefung **211.** Nach dem Einschwenken der Abdeckung **255** ist der Stecker **255** freigegeben, wie in **Figur 10** dargestellt ist

Nach dem Einlegen in die untere Haltesicherung unter Vollzug der elektrischen Steckerverbindung wird der obere die Hörmuschel enthaltende Teil des Handfunktelefons **201** in die Aufnahmeeinrichtung **203** eingedrückt Die Haltesicherung **207** ist, wie in den **Figuren 6,7** und **9** dargestellt, geöffnet. Beim Einschwenken wird als erstes der gefederte Stössel **245** gegen den Boden **236** gedrückt, dann die Antennensteckerverbindung vorgenommen. Kurz vor Beendigung der Eindrückbewegung drückt die Unterkante **262** der oberen Stirnseite **263** des Handfunktelefons **201** auf das Hervorschiebeelement **231** und schiebt dieses in die Öffnung **235** zurück. Durch das Eindrücken wird der Hebelarm **232b** in Richtung des Pfeiles **265** um die Schwenkachse **214** geschwenkt; die geringe Haltekraft hervorgerufen durch den in der Nut **227** liegenden Nippel **221** wird aufgrund der schrägen Wand **230** mit verhältnismäßig geringem Kraftaufwand überwunden. Mit der Schwenkbewegung **265** wird das Halteelement **215** mit seiner Nase **217** über die Oberkante **266** der oberen Stirnseite **263** des Handfunktelefons **201** geschoben und der Nippel **221** rastet in die Nut **220** ein. Das Handfunktelefon **201** ist nun gesichert in der Aufnahmeeinrichtung **203** gehalten und das Reed-Relais, bestehend aus Magnet **251** und Reed-Schalter **252,** schaltet.

Die elektrische Verknüpfung der beiden Reed-Relais bestehend aus Magnet **251** und Reed-Schalter **252** sowie Magnet **249** und Reed-Schalter **250** ist derart ausgelegt, daß bei in der Aufnahmeeinrichtung **203** eingelegtem Handfunktelefon **201** und in die Konsole **205** eingeschnappter Aufnahmeeinrichtung **203** auf Freihören und -sprechen umgeschaltet ist. Es sind ein externes Mikrofon und ein externer Lautsprecher zugeschaltet. Die handfunktelefoneigene Sprech- und Hörmuschel sowie diejenigen der Aufnahmeeinrichtung **203** sind ausgeschaltet. Ist die Aufnahmeeinrichtung **203** aus der Konsole **205** ausgeklinkt und das Handfunktelefon **201** in der Aufnahmeeinrichtung **203** einliegend, so sind die Hörmuschel **240** in der Ausbuchtung **237** und eine Sprechkapsel **267** im unteren Teil der Aufnahmeeinrichtung **203** aktiviert. Die Sprechkapsel **267** ist über akustische Kanäle **269** mit der Umwelt verbunden; das externe Mikrofon und der externe Lautsprecher sowie Sprech- und Hörmuschel des Handfunktelefons **201** sind ausgeschaltet.

Ist das Handfunktelefon **201** aus der Aufnahmeeinrichtung **203** entnommen, so sind dessen Hör- und Sprechmuschel aktiviert; diejenigen der Aufnahmeeinrichtung **203** sowie der externe Lautsprecher und das externe Mikrofon sind ausgeschaltet. Dieselbe Verschaltung ergibt sich auch bei in die Konsole **205** eingeklinkter Aufnahmeeinrichtung **203** und herausgenommenem Handfunktelefon **201.**

Bei einer bevorzugten Ausführungform des Telefongeräts ist eine Umschalttaste vorgesehen, mit der Hör- und Sprechmuschel der Aufnahmeeinrichtung **203** aktivierbar sind, damit ein zweiter Gesprächspartner an einem mit dem entnommenen Handfunktelefon **201** geführten Gespräch aktiv teilnehmen kann. Als Umschalttaste kann nun beispielsweise der Stössel **245** bei aus der Konsole **205** entnommener Aufnahmeeinrichtung **203** dienen, der dann fiir die Dauer des Gesprächs eingedrückt sein muß. Der Stössel **245** kann zu diesem Zweck auch eine Drehverriegelung analog einem Bajonettverschluß aufweisen, welche ihn in einer vollständig in den Boden **236** des Aufnahmerraums **206** eingedrückten Lage dauernd festhält. Durch eine Rückdrehung wird dann der Stössel **245** wieder freigegeben. Bevorzugt wird man die Stösseloberseite mit einer Riffelung für eine gute Griffigkeit zur eindrückenden Fingerkuppe versehen. Ein Einrasten des Stössels **236** erfolgt bei einem Eindrückweg der tiefer liegt als bei eingesetztem Handfunktelefon **201.** Auch kann hierfür eine Umschalttaste auf dem unteren Teil der Aufnahmeeinrichtung angeordnet werden. Es kann auch eine Taste oder eine Tastenkombination des Handfunktelefons zum Umschalten verwendet werden, was den Vorteil haben würde, daß der zweite Gesprächspartner sich nicht selbständig eine Mithör- und Sprechberechtigung gewähren kann.

Anstatt den Stecker **253** im unteren Teil der Aufnahmeeinrichtung **203** anzuordnen, kann er auch mit der oberen Haltesicherung **207** kombiniert werden, wobei der Zusammensteckvorgang mit der Bewegung des Halteelements erfolgen würde. Eine weitere Möglichkeit eines Steckerschutzes zeigen die **Figuren 13** und **12.** Zum besseren Verständnis ist die Abdeckfunktion in **Figur 11** getrennt von einer Ausschiebefunktion eines im unteren Teil der Aufnahmeeinrichtung angeordneten Steckers **270** in **Figur 13** dargestellt

Eine zur Vertiefung **211** analoge Vertiefung hat gemäß der Ausführungsvariante der **Figuren 11** und **13** bei herausgenommenem Handfunktelefon **201** in seinen seitlichen Wandungen **271a** und **271b** je eine einschwenkbare Zunge **273a** und **273b.** Die Zungenschwenklager **274a** und **274b** sind innerhalb der Wandungen **271a** und **271b** angeordnet. Die den Schwenklagern **274a** und **274b** abgewandten Zungenenden liegen unterhalb des Bodens der Vertiefung. An ihnen ist in einem Längsschlitz **275a** bzw. **275b** je eine Verschiebeplatte **276a** und **276b** mit je einer Achse **277a** bzw. **277b** beweglich gehalten. Beide Verschiebeplatten **276a** und **276b** haben einen Schlitz **279a** bzw. **279b,** dessen Länge um eine Toleranz größer ist als die halbe Breite des Steckers **270.** Die Schlitzbreite ist um eine Toleranz größer als die Dicke des Stekkers **270.** Beide Verschiebeplatten **276a** und **276b** sind an den den Achsen **277a** und **277b** entgegengesetzten Enden mit je einer Feder **280a** bzw. **280b** in Längsrichtung gespannt. Fi**gur 13** zeigt die Bauelemente in einer Lage bei herausgenommenem Handfunktelefon **201.** Die Öffnungen **279a** und **279b** liegen bei herausgenommenem Handfunktelefon **201** derart, daß die Oberseite des Steckers **270** in der Vertiefung spritzwasserdicht abgedeckt ist.

Wird nun die untere Stirnseite **260** des Handfunktelefons **201** in die Vertiefung eingeschoben, so werden die in den Wänden **271a** und **271b** angeordneten Zungen **273a** und **273b** in Richtung der Pfeile **281a** und **281b** entgegen der Kraft der Federn **280a** und **280b** eingedrückt. Hierdurch werden die beiden Verschiebeplatten **276a** und **276b** verschoben, bis die beiden Schlitze **279a** und **279b** übereinanderliegend aneinander anschließen. Der Stecker **270** ist nun frei, um das andere Kupplungsteil in der unteren Stirnseite **260** des Handfunktelefons **201** aufzunehmen.

Die Verschiebefunktion des Steckers **270,** wobei auch hier als Variante eine Buchse angeordnet werden könnte, wird anhand der schematischen Darstellung in **Figur 12** erläutert. Diese Figur zeigt den Zustand des Steckers **270** ebenfalls bei herausgenommenem Handfunktelefon **201.** Hierbei wird der Stecker **270** entgegen der Kraft von beidseitigen Druckfedern **283a** und **283b** in einer Stellung unterhalb des Vertiefungsbodens gehalten. Die beiden Schlitze **279a** und **279b** in den Verschiebeplatten sind, wie in **Figur 11** dargestellt, in der spritzwassergeschützten Lage. Die in **Figur 12** dargestellte Zunge **273a** (identisch mit der in **Figur 11** dargestellten) wird über die Kraft der Feder **280a (Figur 13)** in der gezeichneten Lage gehalten. Von der Achse **277a** (identisch mit derjenigen in **Figur 11)** ist ein über zwei Rollen **284a** und **284b** umgelenkter Seilzug **285** zum Stecker **270** geführt. Der Stecker **270** ist senkrecht zum Boden der Vertiefung verschiebbar in zwei Längsführungen **286a** und **286b** geführt. Als Längsführungen **286a** und **286b** können beispielsweise die Ränder in einer Platte dienen. Der Seilzug **285** ist mit einer in ihn eingesetzten Feder **287** unter Spannung gehalten.

Wird nun die untere Stirnseite **260** des Handfunktelefons **201** eingeschoben, so wird, wie bereits oben ausgeführt, die Zunge **273a** in Pfeilrichtung **281a** bewegt. Hierdurch könnte der Stecker **270** durch die Kraft der Federn **283a** und **283b** nach oben geschoben werden. Dies ist jedoch noch nicht möglich, da die beiden Schlitze **279a** und **279b** noch nicht den gesamten Steckerteilquerschnitt freigegeben haben. Der freiwerdende Seilzugweg des Seilzugs **285** wird von der Feder **287** aufgenommen. Erst wenn die beiden Schlitze **279a** und **279b** durch das Einschieben weit genug bewegt sind, schnellt der Stecker **270** nach oben in den passenden Kupplungsteil in der unteren Stirnseite **260** des Handfunktelefons **201.**

Zur Umgehung dieser verzögerten zweiten Bewegung kann für die Verschiebung des Stekkers **270** eine dritte Zunge verwendet werden. In diesem Fall werden dann die drei Zungen nicht mehr mit einer geraden Einlauflinie versehen, sondern mit einem gekrümmten, den geforderten Bewegungen angepaßten Verlauf.

Anstelle der obenbeschriebenen mechanischen Schutzvorrichtung kann auch eine gummielastische spritzwasserdichte Schutzeinrichtung verwendet werden. Der im Unterteil oder in einem anderen Bereich angeordnete Kupplungsteil hat eine auch nach unten offene Schutzwandung. Diese Schutzeinrichtung besteht, vereinfacht gesagt, aus einer fluidgefüllten Blase unter Druck, welche im Bereich der unteren Öffnung der Schutzwandung eine Membran aufweist. Die Wandung der Blase besteht aus elastischem Material. Der Elastizitätskoeffizient der Membran ist kleiner als derjenige der restlichen Blasenwandung. Infolge des Blasendrucks stülpt sich diese Membran in den freien Bereich der Schutzwandung und dichtet somit spritzwasserdicht die von der Schutzwand umgebenen Kontakte ab. Beim Einstecken der unteren Stirnseite **260** des Handfunktelefons **201** in den Unterteil wird durch dessen Kupplungsteil die Membran aus dem Freiraum der Schutzwandung herausgedrückt.

Je nach Ausführung des Handfunktelefons **201** kann die Kopplung für die Signal- und/oder Energieübertragung im unteren Teil der Aufnahmeeinrichtung **203** an der Seite oder an einer anderen Stelle vorgesehen werden. Die Kupplungsteile können derart ausgebildet werden, daß die Signal- und/oder Energieübertragung berührungslos, insbesondere induktiv oder über elektromagnetische Wellen erfolgt. Die induktive Übertragung wird man insbesondere für die Energieübertragung z. B. zu einem Akkumulator im Handfunktelefon wählen. Es könnte hiermit aber auch eine Übertragung des nachrichtentechnischen Signals erfolgen. Elektromagnetische Wellen, insbesondere sichtbares oder infrarotes Licht, wird man für die nachrichtentechnische Übertragung und für die Übertragung von Steuersignalen verwenden. Hierzu wird man im Handfunktelefon sowie auch in der Vertiefung bzw. in deren umliegenden Bereichen Sender-/Empfängerdioden installieren, welche lediglich durch jeweils ein transparentes Fenster voneinander getrennt sind. Das Fenster dient als Schutzeinrichtung zum Schutz vor dem Eindringen von Flüssigkeit und/oder Fremdkörpern. Bei dieser Ausführungsart ist auch ein ausgezeichneter Schutz bei eingelegtem Handfunktelefon gegeben. Diese Konstruktion läßt sich problemlos wasserdicht, insbesondere in einer Verbindung mit der induktiven Energieübertragung ausbilden.

## Patentansprüche

1. Teilnehmerstation als Telefoniereinrichtung **(9), gekennzeichnet durch** ein Handfunktelefon **(17; 113; 201),** eine Aufnahmeeinheit **(25; 111; 203)** mit einem Aufnahmeraum, in den das Handfunktelefon **(17; 113; 201)** herausnehmbar einlegbar ist, und wenigstens eine Funktionstaste **(33a-c; 127a-c)** zusätzlich zur Teilnehmerwahleinrichtung, welche an der Aufnahmeeinheit **(25; 111; 203)** angeordnet ist und mit der bzw. denen eine nachrichtentechnisch fremde Subsystembefehlsgebung, wie z.B. eine Beleuchtungssteuerung, Klimasteuerung, Zugbegleiterruf, Kellneruf, Informationsabruf, Notfallmanagement, aktivierbar ist.

2. Teilnehmerstation nach Anspruch 1, **gekennzeichnet durch** eine Verbindungssperreinheit und eine mit ihr zusammenwirkende Identifizierungseinheit, damit ein nachrichtentechnischer Verbindungsaufbau und eine Benutzung dieser Verbindung nur nach einer Identifizierung des Benutzers möglich ist und bevorzugt Steuerungswerte für die nachrichtentechnisch fremde Subsystembefehlsgebung über die Wähltastatur **(29; 120)** der Telefoniereinrichtung einstellbar sind.

3. Teilnehmerstation nach Anspruch 2, **dadurch gekennzeichnet, daß** die Identifizierungseinheit eine Eingabeeinheit zur Eingabe eines Identifizierungsmittels hat, vom Identifizierungsmittel, insbesondere von einer Kreditkarte, mit der identifizierungseinheit wenigstens ein Sicherheitsbetrag abbuchbar und dieser auf das Identifizierungsmittel nach Sperrung bzw. Trennung der Verbindung durch die Verbindungseinheit wenigstens teilweise rückbuchbar ist.

4. Teilnehmerstation nach Anspruch 2 oder 3, **gekennzeichnet durch** eine Basisstation **(7)**, eine eine Sprechkapsel **(34, 39b)** und eine Hörmuschel **(39a)** aufweisende Telefoniereinrichtung **(23),** welche bevorzugt ein aus einer Aufnahmeeinrichtung **(25)** herausnehmbares Handfunktelefon **(17; 113; 201)** aufweist, wobei in bevorzugter Weise die Basisstation **(7)** eine Leseeinrichtung **(42)** für ein Identifizierungsmittel und eine mechanische Verriegelungseinheit **(48)** für die Telefoniereinrichtung **(23)** aufweist, und die Telefoniereinrichtung **(23)** erst von der Basisstation **(7)** entnehmbar ist, wenn ein gültiges Identifizierungsmittel in diese eingeschoben ist und das eingeschobene Identifizierungsmittel erst nach in die Basisstation **(7)** eingebrachter Telefoniereinrichtung **(23)** aus der Leseeinrichtung **(42)** entnehmbar ist.

5. Teilnehmerstation nach einem der Ansprüche 1 bis 4, **dadurch gekennzeichnet, daß** die Aufnahmeeinrichtung **(25)** oder das Handfunktelefon **(17; 113; 201)** eine Leseeinrichtung für ein identifizierungsmittel und die Basisstation **(7)** eine mechanische Verriegelungseinrichtung **(48)** aufweist, wobei die Aufnahmeeinrichtung **(25)** oder die Aufnahmeeinrichtung zusammen mit dem Handfunktelefon **(17; 113; 201)** erst von der Basisstation **(7)** entnehmbar ist bzw. sind, wenn ein gültiges Identifizierungmittel eingeschoben wurde und das eingeschobene Identifizierungmittel erst nach in die Basisstation **(7)** eingebrachter Aufnahmeeinrichtung aus dieser entnehmbar ist.

6. Nachrichtentechnische Verbindungsanordnung mit einer Teilnehmerstation nach einem der Ansprüche 1 bis 5, **gekennzeichnet durch** eine Datenverarbeitungs- und/oder Steuereinrichtung **(19; 103),** die derart ausgebildet ist, daß zusätzlich zu nachrichtentechnischen Daten weitere nicht nachrichtentechnische Daten, welche von mit der Teilnehmerwahleinrichtung der Telefoniereinrichtung der Teilnehmerstation angewählten, peripheren Einheiten **(106)** abgebbar sind, verarbeitbar und/oder übermittelbar sind.

7. Verbindungsanordnung nach Anspruch 6, **gekennzeichnet durch** eine die Datenverarbeitungs- und/oder Steuereinrichtung **(19; 103)** zum Verbindungsaufbau und/oder der Datenverarbeitung freigebenden Authorisierungseinheit **(130),** welche erste Authorisierungsdaten und eine Datenaufnahmeeinheit zur Erkennung von einem Benutzer einzubringender zweiter, schfüsselartig zu den ersten passenden Authentisierungsdaten aufweist.

8. Verbindungsanordnung nach Anspruch 6 oder 7, **dadurch gekennzeichnet, daß** die Telefoniereinrichtung der Teilnehmerstation transportabel ausgebildet ist und die Datenverarbeitungs- undloder Steuereinrichtung **(19; 103)** Mittel zur augenblicklichen geografischen Ortsbestimmung der Telefoniereinrichtung hat.

9. Verbindungsanordnung nach einem der Ansprüche 6 bis 8, **gekennzeichnet durch** mit der Datenverarbeitungs- und/oder Steuereinrichtung **(19; 103)** verbindbare periphere Meß- und Informationsdatengeber, deren Daten von der Telefoniereinrichtung bevorzugt mit Rufnummerdaten aus einem Rufnummerspeicher der Datenverarbeitungs- und/oder Steuereinrichtung **(19; 103)** selbsttätig übermittelbar sind und/oder bevorzugt einen in einem Speicher der Datenverarbeitungs- und/oder Steuereinrichtung **(19; 103)** abgelegten Datensatz zur Aussendung bringen.

10. Fahrzeug mit einer nachrichtentechnischen Verbindungsanordnung nach einem der Ansprüche 6 bis 9, **gekennzeichnet durch** mehrere ortsfest angeordnete Basisstationen **(7)** aufweisende, erste Teilnehmerstationen **(9; 101)** als Telefoniereinrichtung und eine zentrale Kommunikationseinrichtung **(1)**, über die mit außerhalb des Fahrzeugs befindlichen zweiten Teilnehmerstationen und bevorzugt auch mit den ersten Teilnehmerstationen **(9; 101)** untereinander kommuniziert werden kann.

11. Fahrzeug, insbesondere Großraumreisefahrzeug, nach Anspruch 10, **dadurch gekennzeichnet, daß** die zentrale Kommunikationseinrichtung **(1)** eine Datenverarbeitungsund/oder Steuereinrichtung **(19; 102)** aufweist, die derart ausgebildet ist, daß zusätzlich zu nachrichtentechnischen Daten weitere nicht nachrichtentechnische Daten, welche von mit einer Teilnehmerwahleinrichtung der Teilnehmerstation **(9; 101)** angewählten, peripheren Einheiten abgebbar sind, verarbeitbar und/oder übermittelbar sind.

12. Fahrzeug nach Anspruch 10 oder 11, **dadurch gekennzeichnet, daß** das Fahrzeug bevorzugt ein Großraumreisefahrzeug ist, die Basisstation **(7)** bevorzugt in Griffnähe zum jeweiligen Sitzplatz eines Fahrgastes angeordnet ist, die Kommunikationseinrichtung **(1)** eine Dienstleistungsvermittlungseinrichtung **(5)** und nur eine einzige mit der Außenwelt kommunizierende Nachrichtensende- und Empfangseinheit **(3)** und bevorzugt je ein Energieversorgungsinterface für den Verbindungsaufbau und die Nachrichtenübermittlung hat sowie jede Teilnehmerstation **(9; 101)** eine Ladestation, mit der auch der Energiespeicher eines aus einer Aufnahmeeinrichtung **(25)** herausnehmbaren Handfunktelefons **(17)** der Teilnehmerstation **(9; 101)** aufladbar ist, aufweist und insbesondere jede Teilnehmerstation **(9; 101)**, bevorzugt deren Basisstation **(7)**, eine Entkopplungseinrichtung **(45)** zwischen Energieversorgung und nachrichtentechnischen Signalen hat, damit die Energiezuleitungen **(13)** gleichzeitig als Signalleitungen **(13)** zur zentralen Kommunikationseinrichtung **(1)** verwendbar sind, und bevorzugt die Basisstation **(7)** ortsfest in Griffnähe zum jeweiligen Sitzplatz eines Fahrgasts im Großraumreisefahrzeug angeordnet ist.

13. Fahrzeug nach einem der Ansprüche 10 bis 12, **gekennzeichnet durch** eine mit mehreren Teilnehmerstationen **(9; 101)** zusammenwirkende Dienstleistungsvermittlungseinrichtung **(5)** der zentralen Kommunikationseinrichtung **(1)** und jeweils ein jeder Teilnehmerstation **(9; 101)** zugeordnetes bildliches Anzeigeelement **(41, 44),** welches insbesondere in dem Handfunktelefon **(17)** und/oder der Aufnahmeeinrichtung **(25)** und/oder der Basisstation **(7)** jeweils einer Telefoniereinrichtung **(23)** jeder ersten Teilnehmerstation **(9)** und/oder als separates Bauteil **(44)** zu jeder Telefoniereinheit **(9; 101)** mit der Dienstleistungsvermittlungseinrichtung **(5)** angeordnet ist, wobei auf dem Anzeigeelement **(41, 44)** insbesondere Reiseinformationen und/oder Dienstleistungsvermittlungen anzeigbar sind.

14. Fahrzeug nach einem der Ansprüche 10 bis 13, **dadurch gekennzeichnet, daß** jede Teilnehmerstation **(9)** zusätzlich zu nachrichtentechnischen Einrichtungen Funktionsgeber **(33a-c)** aufweist, welche über die Wähltastatur **(29)** einer Telefoniereinrichtung **(23)** der Teilnehmerstation **(9)** und/oder über Funktionstasten an der Basisstation und/oder einer ein Handfunktelefon **(17)** aufnehmenden Aufnahmeeinrichtung **(25)** der Telefoniereinrichtung **(23)** aktivierbar sind.

## Claims

1. Subscriber's station as a telephoning device (9), **characterised by** a hand-held cordless telephone (17; 113, 201), a holding unit (25; 111; 203) with a holding space in which the hand-held cordless telephone (17; 113, 201) can be placed in a removable manner, and at least one function key (33a-c; 127a-c) in addition to the subscriber's dialling device, which key is disposed at the holding unit (25; 111; 203) and with which subsystem command initiation which is extraneous to the telecommunications, such as, e.g. lighting control, air-conditioning control, train guard call, waiter call, information retrieval, emergency management, can be activated.

2. Subscriber's station according to Claim 1, **characterised by** a connection blocking unit and an identification unit, which co-operates with the latter, so that a telecommunications connection set-up is possible and this connection can be used only after the user has been identified, and control values for subsystem command initiation which is extraneous to the telecommunications can be set via the dialling keypad (29; 120) of the telephoning device.

3. Subscriber's station according to Claim 2, **characterised in that** the identification unit has an input unit for inputting an identification means, at least one security sum can be deducted from the identification means, in particular from a credit card, with the identification unit, and this can be at least partly carried back to the identification means after blocking or interrupting the connection via the connection unit.

4. Subscriber's station according to Claim 2 or 3, **characterised by** a base station (7), a telephoning device (23) which comprises a telephone transmitter capsule (34, 39b) and an ear-piece (39a) and preferably a hand-held cordless telephone (17; 113; 201) which can be removed from a holding device (25), wherein the base station (7) preferably comprises a read device (42) for an identification means and a mechanical locking unit (48) for the telephoning device (23), and the telephoning device (23) cannot be removed from the base station (7) until a valid identification means has been inserted in the latter, and the inserted identification means cannot be removed from the read device (42) until the telephoning device (23) has been introduced into the base station (7).

5. Subscriber's station according to any one of Claims 1 to 4, **characterised in that** the holding device (25) or the hand-held cordless telephone (17; 113; 201) comprises a read device for an identification means, and the base station (7) comprises a mechanical locking device (48), wherein the holding device (25) or the holding device together with the hand-held cordless telephone (17; 113; 201) cannot be removed from the base station (7) until a valid identification means has been inserted, and the inserted identification means cannot be removed from the base station (7) until the holding device has been introduced into the latter.

6. Telecommunications connection arrangement with a subscriber's station according to any one of Claims 1 to 5, **characterised by** a data processing and/or control device (19; 103) which is formed such that, in addition to telecommunications data, further non-telecommunications data, which are derived from peripheral units (106) selected with the subscriber's dialling device of the telephoning device of the subscriber's station, can be processed and/or transmitted.

7. Connection arrangement according to Claim 6, **characterised by** an authorisation unit (130) which enables the data processing and/or control device (19; 103) for connection set-up and/or data processing and which comprises first authorisation data and a data accept unit for recognising second authorisation data to be introduced by a user and pertinent in coded fashion to the first authorisation data.

8. Connection arrangement according to Claim 6 or 7, **characterised in that** the telephoning device of the subscriber's station is portable, and the data processing and/or control device (19; 103) has means for the instantaneous geographical position determination of the telephoning device.

9. Connection arrangement according to any one of Claims 6 to 8, **characterised by** peripheral measurement and information data generators which can be connected to the data processing and/or control device (19; 103) and the data of which can be automatically transmitted by the telephoning device preferably with call number data from a call number memory of the data processing and/or control device (19; 103) and/or preferably cause a data set which is stored in a memory of the data processing and/or control device (19; 103) to be emitted.

10. Vehicle with a telecommunications connection arrangement according to any one of Claims 6 to 9, **characterised by** a plurality of first subscriber's stations (9; 101), which comprise fixed base stations (7), as a telephoning device, and a central communications device (1) via which it is possible to communicate with second subscriber's stations located outside of the vehicle and preferably also for the first subscriber's stations to communicate with one another.

11. , Vehicle, in particular large-capacity tour vehicle, according to Claim 10, **characterised in that** the central communications device (1) comprises a data processing and/or control device (19; 102) which is formed such that, in addition to telecommunications data, further non-telecommunications data, which are derived from peripheral units selected with a subscriber's dialling device of the subscriber's station (9, 101), can be processed and/or transmitted.

12. Vehicle according to Claim 10 or 11, **characterised in that** the vehicle is preferably a large-capacity tour vehicle, the base station (7) is preferably disposed within reach of the respective seat of a passenger, the communications device (1) has a service network device (5) and just one message transmitter and receiver unit (3) which communicates with the outside world, and preferably a respective power supply interface for the connection set-up and message transmission, and each subscriber's station (9; 101) comprises a charging station with which the energy store of a hand-held cordless telephone (17), which can be removed from a holding device (25), of the subscriber's station (9; 101) can also be charged, and, in particular, each subscriber's station (9; 101), preferably the base station (7) thereof, has a decoupling device (45) between the power supply and telecommunications signals, so that the power feed lines (13) can simultaneously be used as signal lines (13) to the central communications device (1), and the base station (7) is preferably disposed in a fixed fashion within reach of the respective seat of a passenger in the large-capacity tour vehicle.

13. Vehicle according to any one of Claims 10 to 12, **characterised by** a service network device (5), which co-operates with a plurality of subscriber's stations (9; 101), of the central communication device (1) and a respective graphical display element (41, 44), which, is associated with each subscriber's station (9; 101) and which is disposed in particular in the hand-held cordless telephone (17) and/or the holding device (25) and/or the base station (7) of a respective telephoning device (23) of each first subscriber station (9) and/or as a component (44) separate from each telephoning unit (9; 101) with the service network device (5), wherein travel information and/or service networks in particular can be displayed on the displayed elements (41, 44).

14. Vehicle according to any one of Claims 10 to 13, **characterised in that**, in addition to telecommunications devices, each subscriber's station (9) comprises function generators (33a-c) which can be activated via the dialling keypad (29) of a telephoning device (23) of the subscriber's station (9) and/or via function keys at the base station and/or a holding device (25), which holds the hand-held cordless telephone (17), of the telephoning device (23).

## Revendications

1. Poste téléphonique d'abonné en tant qu'installation téléphonique (9), **caractérisé par** un poste de radiotéléphonie portatif (17 ; 113 ; 201), une unité de réception (25 ; 111 ; 203) avec un espace de réception, duquel le poste de radiotéléphonie portatif (17 ; 113 ; 201) peut être détaché et dans lequel il peut être inséré, et au moins une touche de fonction (33a-c ; 127a-c) en plus pour un dispositif de numérotation directe, lequel est disposé sur l'unité de réception (25 ; 111 ; 203) et avec lequel ou lesquels peut être activée une émission d'instructions d'un sous-système différent par la technique des télécommunications, telle qu'une commande de l'éclairage, une commande de la climatisation, un appel d'un agent de train, un appel d'un serveur, une recherche d'informations, une gestion des urgences.

2. Poste téléphonique d'abonné selon la revendication 1, **caractérisé par** un dispositif de blocage des communications et un dispositif d'identification coopérant avec lui afin qu'un établissement d'une communication par la technique des télécommunications et qu'une utilisation de cette communication ne soit possible qu'après une identification de l'utilisateur et, de préférence, en ce que les valeurs de commande pour l'émission d'instructions du sous-système différent par la technique des télécommunication peuvent être réglées par un clavier de sélection (29 ; 120) de l'installation téléphonique.

3. Poste téléphonique d'abonné selon la revendication 2, **caractérisé en ce que** le dispositif d'identification comporte une unité d'entrée pour entrer un moyen d'identification, au moins un montant de sécurité peut être prélevé par le moyen d'identification, en particulier, par une carte de crédit, avec le dispositif d'identification, et ledit montant peut être au moins partiellement remis sur le moyen d'identification après que la communication a été bloquée ou coupée par le dispositif de communication.

4. Poste téléphonique d'abonné selon la revendication 2 ou 3, **caractérisé par** une station formant base (7), une installation téléphonique (23) comportant une capsule téléphonique microphonique (34, 39b) et un pavillon d'écouteur (39a), laquelle installation téléphonique comporte, de préférence, un poste de radiotéléphonie portatif (17 ; 113 ; 201) susceptible d'être détaché d'une unité de réception (25), moyennant quoi, la station formant base (7) comporte, de préférence, une unité de lecture (42) pour un moyen d'identification et un dispositif de verrouillage (48) mécanique pour l'installation téléphonique (23), et l'installation téléphonique (23) ne peut être retiré de la station formant base (7), que si un moyen d'identification valable y est inséré et le moyen d'identification inséré ne peut être retiré du dispositif de lecture (42) qu'après la mise en place de l'installation téléphonique (27) dans la station formant base (7).

5. Poste téléphonique d'abonné selon l'une quelconque des revendications 1 à 4, **caractérisé en ce que** l'unité de réception (25) ou le poste de radiotéléphonie portatif (17 ; 113 ; 201) comporte un dispositif de lecture pour un moyen d'identification et la station formant base (7) comporte un dispositif de verrouillage mécanique (48), moyennant quoi, l'unité de réception (25) ou l'unité de réception conjointement avec le poste de radiotéléphonie portatif (17 ; 113 ; 201) ne peut ou ne peuvent être détaché(s) de la station formant base (7) que si un moyen d'identification valable a été inséré et le moyen d'identification inséré ne peut être retiré de l'unité de lecture qu'après la mise en place de l'unité de réception dans la station formant base (7).

6. Agencement de communication par la technique des télécommunications avec un poste téléphonique d'abonné selon l'une quelconque des revendications 1 à 5, **caractérisé par** une unité de traitement des données et/ou une unité de commande (19 ; 103), qui est formée de façon telle qu'en plus des données de technique des télécommunications, d'autres données n'étant pas des données de technique des télécommunications, lesquelles sélectionnées par les unités périphériques (106) avec le dispositif de numérotation directe de l'installation téléphonique du poste téléphonique d'abonné sont susceptibles d'être remises, traitées et/ou transmises.

7. Agencement de communication selon la revendication 6, **caractérisé par** une unité d'autorisation (130) donnant la permission à l'unité de traitement des données et/ou de commande (19 ; 103) d'établir la communication et/ou de traiter les données, laquelle unité d'autorisation comporte des premières données d'autorisation et une unité d'enregistrement des données en vue de la reconnaissance des secondes données d'autorisation correspondant comme une clé aux premières données d'autorisation introduites par un utilisateur.

8. Agencement de communication selon la revendication 6 ou 7, **caractérisé en ce que** l'installation téléphonique du poste téléphonique d'abonné est formée de manière à être transportable et **en ce que** l'unité de traitement des données et/ou de commande (19 ; 103) comporte un moyen pour une localisation géographique momentanée de l'installation téléphonique.

9. Agencement de communication selon l'une quelconque des revendications 6 à 8, **caractérisé par** des indicateurs périphériques de mesure et d'informations susceptibles d'être reliés aux unités de traitement des données et/ou de commande (19 ; 103) dont les données sont susceptibles d'être transmises sans délai automatiquement par l'installation téléphonique, de préférence, avec les données du numéro d'abonné provenant d'une unité de stockage des numéros d'abonnés de l'unité de traitement des données et/ou de commande (19 ; 103) et/ou, de préférence, d'émettre un ensemble de données stockées dans une mémoire de l'unité de traitement des données et/ou de commande (19 ; 103).

10. Véhicule avec un agencement de communication par la technique des télécommunications selon l'une quelconque des revendications 6 à 9, **caractérisé par** plusieurs stations formant base (7) disposées de manière fixe comportant des premiers postes téléphoniques d'abonné (9 ; 101) en tant qu'installation téléphonique et une installation de communication centrale (1), par laquelle il est possible d'établir réciproquement une communication entre des seconds postes téléphoniques d'abonné se trouvant hors du véhicule et, de préférence, également avec les premiers postes téléphoniques d'abonné (9 ; 101).

11. Véhicule, en particulier, les véhicules de grand tourisme selon la revendication 10, **caractérisé en ce que** l'installation de communication centrale (1) comporte une unité de traitement des données et/ou de commande (19 ; 102), qui est formée de façon telle qu'en plus des données de technique des télécommunications, d'autres données n'étant pas des données de technique des télécommunications, lesquelles sélectionnées par les unités périphériques avec le dispositif de numérotation directe de l'installation téléphonique du poste téléphonique d'abonné (9 ; 11) sont susceptibles d'être remises, traitées et/ou transmises.

12. Véhicule selon la revendication 10 ou 11, **caractérisé en ce que** le véhicule est, de préférence, un véhicule de grand tourisme, la station formant base (7) est disposée, de préférence, à portée de main de la place assise respective d'un passager, l'installation de communication (1) comporte un dispositif de communication de services (5) et uniquement un seul dispositif d'émission et de réception de messages (3) communiquant avec le monde extérieur et **en ce que** chacun a, de préférence, une interface d'alimentation en énergie pour l'établissement de la communication et la transmission des messages ainsi que ledit poste téléphonique d'abonné (9 ; 101) une station de charge avec laquelle l'accumulateur d'énergie d'un poste de radiotéléphonie portatif (17) du poste téléphonique d'abonné (9 ; 101) susceptible d'être détaché d'une unité de réception (25) est également susceptible d'être rechargé, et **en ce que**, en particulier, ledit poste téléphonique d'abonné (9 ; 101) dont la station formant base (7) comporte, de préférence, un dispositif de découplage (45) entre l'alimentation en énergie et les signaux techniques des télécommunications afin que les lignes électriques (13) puissent être utilisées en même temps que les fils de signaux (13) de l'installation de communication centrale(1) et **en ce que** la station formant base (7) est, de préférence, disposée de manière fixe à portée de main de la place assise respective d'un passager dans un véhicule de grand tourisme.

13. Véhicule selon l'une quelconque des revendications 10 à 12, **caractérisé par** un dispositif de communication de services (5) de l'unité de communication centrale (1) coopérant avec plusieurs postes téléphoniques d'abonné (9 ; 101) et à chaque fois, une cellule de visualisation (41, 44) en images placée dans ledit poste téléphonique d'abonné (9 ; 101), laquelle cellule de visualisation, en particulier, est disposée dans le poste de radiotéléphonie portatif (17) et/ou dans l'unité de réception (25) et/ou dans la station formant base (7) de chaque installation téléphonique (23) dudit premier poste téléphonique d'abonné (9) et/ou en tant qu'élément séparé (44) de ladite installation téléphonique (9 ; 101) avec le dispositif de communication de services (5), moyennant quoi, en particulier, des informations de voyage et/ou des communications de services sont susceptibles d'être affichées sur la cellule de visualisation (41, 44).

14. Véhicule selon l'une quelconque des revendications 10 à 13, **caractérisé en ce que** chaque poste téléphonique d'abonné (9) comporte en plus des dispositifs de technique des télécommunications des indicateurs de fonction (33a-c), lesquels indicateurs peuvent être activés par un clavier de sélection (29) d'une installation téléphonique (23) d'un poste téléphonique d'abonné (9) et/ou par des touches de fonction situées sur la station formant base et/ou sur une unité de réception (25) de l'installation téléphonique (23) recevant le poste de radiotéléphonie portatif (17).
